# EUROPÄISCHE PATENTSCHRIFT

(11) **EP 2 739 424 B1**
(45) Veröffentlichungstag und Bekanntmachung des Hinweises auf die Patenterteilung: **20.04.2016**
(21) Anmeldenummer: 12753374.3
(22) Anmeldetag: 12.07.2012
(51) Int. Cl.: B23K 9/10

(54) **SCHWEISSSTROMQUELLE UND VERFAHREN ZU DEREN STEUERUNG**
CONNECTION PORT OF A WELDING POWER SOURCE AND METHOD OF PILOTING THE SAME
CONNECTEUR DE SOURCE DE PUISSANCE DE SOUDAGE ET MÉTHODE DE PARAMÉTRAGE DUDIT CONNECTEUR

(30) Priorität: 14.07.2011 AT 10362011
(43) Veröffentlichungstag der Anmeldung: 11.06.2014
(73) Patentinhaber: Fronius International GmbH, 4643 Pettenbach (AT)
(72) Erfinder: SPISIC, Bernhard, A-4075 Hinzenbach (AT); EISENKOLB, Thomas, A-4652 Fischlham (AT); KLIEMSTEIN, Patrick, A-4730 Waizenkirchen (AT)
(74) Vertreter: Isarpatent
(86) Internationale Anmeldenummer: PCT/AT2012/050101
(87) Internationale Veröffentlichungsnummer: WO 2013/006885

(56) Entgegenhaltungen:
- WO-A1-99/37435
- WO-A1-02/058877
- WO-A1-03/084706
- US-A1- 2002 166 849

## Beschreibung

Die Erfindung betrifft ein Verfahren zur Steuerung einer Schweißstromquelle, eine Schweißstromquelle sowie ein Computerprogrammprodukt mit einem darauf gespeicherten Computerprogramm wie dies in den Oberbegriffen der Ansprüchen 1, 14 und 15 beschrieben, und aus der WO-A-03084706 bekannt ist.

Die immer noch zunehmende Vernetzung im Bereich von industriellen Prozessen führt dazu, dass Geräte, die in solchen Prozessen verwendet werden, in aller Regel für die Kommunikation mit anderen Geräten ausgerüstet sind. Ein Beispiel für ein Gerät der genannten Art ist eine Schweißstromquelle, welche allgemein zum Herstellen von Schweißungen verwendet werden kann. Neben der eigentlichen Stromquelle, die sozusagen "das Herz" einer Schweißstromquelle bildet, kann diese noch weitere Aggregate umfassen, welche gewöhnlich zum Schweißen benötigt werden. Beispielsweise kann eine Schweißstromquelle Einrichtungen zur Erzeugung und Steuerung eines Schweißgasstroms und/oder Einrichtungen zum Kühlen des Schweißbrenners umfassen.

Die Vernetzung birgt insofern Gefahren in sich, als eine Änderung von Betriebsparametern zu unabsehbaren Folgen führen kann, wenn die Schnittstelle zu weiteren Geräten nicht sorgfältig erstellt wurde. Insbesondere die vergleichsweise hohen Ströme, welche beim Schweißen fließen, stellen ein erhebliches Gefahrenpotenzial dar. Beispielsweise könnte eine Fehlfunktion eines Schweißroboters dazu führen, dass die Schweißspannung an anderen Teilen als dem Werkstück angelegt wird und diese beschädigt oder gar zerstört werden. Auch eine Gefährdung von Personen ist nicht auszuschließen.

Die genannte Schnittstelle umfasst dabei zumindest einen internen Anschluss zu einer Steuerung der Schweißstromquelle hin und zumindest einen externen Anschluss für den Anschluss externer Maschinen. Beispielsweise kann die Schweißstromquelle mit einem Industrieroboter verbunden sein, wodurch solcherart ein Schweißroboter gebildet wird. Häufig werden der Roboter und die Schweißstromquelle von verschiedenen Erzeugern bereitgestellt, wodurch sich die Notwendigkeit ergibt, die Schnittstellen der genannten Geräte aufeinander abzustimmen.

In aller Regel erfolgt dies auf spezielle Anfrage eines Kunden, der solche Geräte miteinander verbinden möchte. Die Hersteller der Geräte erstellen dann eine speziell für den Kunden vorgesehene Schnittstelle. Standardisierte Schnittstellen beziehungsweise flexible Schnittstellen, welche ein Zusammenschließen einer Schweißstromquelle mit anderen Maschinen nach dem Muster "Plug and Play" ermöglichen, existieren dagegen nicht.

Dies führt zu einigen Nachteilen. Beispielsweise sind die Erstellung einer speziellen Schnittstelle und die Einstellung einer Schweißstromquelle relativ zeitaufwändig und erfordern viel Fachwissen. Noch dazu erfordert dieser Vorgang auch Wissen über firmenfremde Maschinen, denn ein Ingenieur des Schweißstromquellen-Herstellers sollte auch über Funktionsweise der daran anzuschließenden Maschine Bescheid wissen, um eine ordnungsgemäß funktionierende Schnittstelle herstellen und die Schweißstromquelle korrekt einstellen zu können. Aufgrund der Fülle von verschiedenartigen Maschinen ist es praktisch unmöglich, über alle denkbaren Kombinationen einer Schweißstromquelle mit einer (beliebigen) Maschine Bescheid zu wissen. Ist dieses Fachwissen doch zu einem Gutteil vorhanden, so ist dieses Personal zumeist stark ausgelastet, was zu langen Wartezeiten bei der Erstellung einer Schnittstelle und der Einstellung einer Schweißstromquelle führt. Aufgrund der hohen Installationskosten beispielsweise eines Schweißroboters möchte ein Kunde eine solche Wartezeit verständlicherweise nicht hinnehmen. Erschwerend kommt noch hinzu, dass Fachpersonal aufgrund der Globalisierung häufig lange Reisen auf sich nehmen muss, um eine Schweißstromquelle einzustellen oder deren Schnittstelle vor Ort zu erstellen. Insbesondere, wenn an sich geringfügige Fehler bei einer bereits gelieferten Schnittstelle oder an der Einstellung der Schweißstromquelle auszubessern sind, ist dies besonders ärgerlich.

Die Aufgabe der Erfindung ist es nun, ein verbessertes Verfahren zur Steuerung einer Schweißstromquelle, sowie eine verbesserte Schweißstromquelle anzugeben. Insbesondere sollen dabei die oben angeführten Probleme vermieden werden.

Die Aufgabe der Erfindung wird mit einem Verfahren zum Konfigurieren einer Schnittstelle einer Schweißstromquelle gemaß Anspruch 1 gelöst,

Die Aufgabe der Erfindung wird weiterhin mit einer Schweißstromquelle gemäß Anspruch 9 gelöst:

Die Aufgabe der Erfindung wird weiterhin mit einem computerprogrammprodukt gemäß Anspurch 10 gelöst.

Erfindungsgemäß wird dadurch erreicht, dass die Einstellung einer Schweißstromquelle sowie die Erstellung beziehungsweise Programmierung einer Schnittstelle einer Schweißstromquelle deutlich vereinfacht wird und damit auch von weniger gut geschultem Personal übernommen werden kann. Durch die erfindungsgemäße Prüfung der Auswirkungen eines gesetzten Wertes können wenigstens schwerwiegende Fehler vermieden werden. Je nach Umfang der genannten Prüfung können Fehler in der Einstellung und Programmierfehler auch gänzlich ausgeschlossen werden. Durch die Vereinfachung ist umfangreiches Fachwissen über die Schweißstromquelle zu deren Einstellung und zur Erstellung einer zugeordneten Schnittstelle nicht mehr erforderlich, sodass beispielsweise auch der Kunde oder der Hersteller einer an die Schweißstromquelle angeschlossenen Maschine in die Lage versetzt werden, die Schweißstromquelle einzustellen beziehungsweise deren Schnittstelle zu programmieren. Lange Wartezeiten und langwierige Reisen bedingt durch einen Engpass an Fachpersonal, wie eingangs beschrieben wurde, können somit vermieden werden.

Neben der Einstellung der Schweißstromquelle mit Hilfe einer daran angeschlossenen (physisch vorhandenen) Maschine, ist es auch möglich, diese anhand eines Modells der Schweißstromquelle und eines damit verbundenen Modells der damit verbundenen Maschine (z.B. anhand eines Modells des Schweißroboters) einzustellen. Die Einstellung der Schweißstromquelle beziehungsweise Definition der Schnittstelle erfolgt also "offline". Erst wenn das Ergebnis der erfindungsgemäß vorgesehenen Prüfung positiv ist, erfolgen die Einstellungen auch in der Realität. Auf diese Weise können gefährliche Situationen wie z.B. das unbeabsichtigte Zünden eines Schweißlichtbogens vermieden werden. Durch die "Offline"-Programmierung werden zudem Stillstandzeiten der betreffenden Geräte verringert.

Vorteilhafte Ausgestaltungen und Weiterbildungen der Erfindung ergeben sich aus den Unteransprüchen sowie aus der Beschreibung in Zusammenschau mit den Figuren.

Günstig ist es, wenn als Betriebsparameter einer oder mehrere aus der Gruppe: Schweißstrom, Schweißspannung, Stromfrequenz, Pulsfrequenz, Pulsdauer, Puls-Breiten-Verhältnis, Betriebszustand, Systemzeit vorgesehen ist. Die genannten Betriebsparameter werden häufig für die Steuerung einer Schweißstromquelle benötigt. Deshalb ist es von Vorteil, die betreffenden Betriebsparameter auch im Modell der Schweißstromquelle zur Verfügung zu stellen.

Vorteilhaft ist es, wenn das Modell der Schweißstromquelle als Satz von Programmierbefehlen repräsentiert ist und ein Programmierbefehl dem zumindest einen Betriebsparameter den zumindest einen Wert zuweist. Beispielsweise kann ein Befehl vorgesehen sein, welcher dem Betriebsparameter "Schweißstrom" oder auch anderen Betriebsparametern einen bestimmten Wert zuweist. Der Programmcode für die Wertezuweisung kann dann in an sich bekannter Weise compiliert und in Folge ausgeführt oder direkt interpretiert werden.

Vorteilhaft ist es auch, wenn das Modell der Schweißstromquelle als Tabelle repräsentiert ist und eine Zelle der Tabelle den zumindest einen Wert des zumindest einen Betriebsparameters enthält. Bei dieser Variante der Erfindung erfolgt die Einstellung der Schweißstromquelle nicht durch Programmcode im herkömmlichen Sinn, sondern durch gezieltes Beschreiben von Zellen einer Tabelle. Beispielsweise kann einer Zelle der Tabelle wiederum der Betriebsberater "Schweißstrom" zugeordnet sein. Wird diese Zelle mit einem bestimmten Wert beschrieben, so wird der Schweißstrom auf diesen Wert gesetzt, zuerst im Modell, und wenn alles in Ordnung ist, auch in der Realität. Selbstverständlich kann diese Tabelle wiederum in einen Programmcode, so wie er zuvor beschrieben wurde, umgewandelt werden. Denkbar ist aber auch jede andere Methode zur Erstellung eines Codes.

Besonders vorteilhaft ist es, wenn das Modell der Schweißstromquelle als graphisches Symbol und der zumindest eine Betriebsparameter als Eingabesymbol repräsentiert sind und eine Eingabe des zumindest einen Wertes bei dem Eingabesymbol dem zumindest einen Betriebsparameter den genannten Wert zuweist. Bei dieser Variante der Erfindung wird dem Programmierer einer Schnittestelle also ein GUI (Graphical User Interface) zur Verfügung gestellt. Durch Beeinflussung der Eingabesymbole, welche beispielsweise mit einer Computermaus, einem Tastenkreuz, einer Tastatur oder eine Joystick manipuliert werden können, kann eine gewünschter Wert für einen Betriebsparameter gesetzt werden. Diese graphische Anordnung kann wiederum in einen Programmcode, so wie er zuvor beschrieben wurde, umgewandelt werden. Denkbar ist aber auch jede andere Methode zur Erstellung eines Codes.

Günstig ist es, wenn die Schnittstelle eine Schnittstelledefinition umfasst, welche eine oder mehrere Schnittstellenfunktionen aus der Gruppe: Zuweisung eines internen Anschlusses zu einem externen Anschluss der Schnittstelle, Skalierungen von über die Schnittstelle übermittelten Werten, Umrechnung einer Einheit eines derart übermittelten Wertes, Umwandlung eines Datenformats eines derart übermittelten Wertes, Invertieren eines derart übermittelten Wertes sowie Zeitverzögerung eines derart übermittelten Wertes umfasst. Die genannten Funktionen werden häufig bei der Erstellung beziehungsweise Programmierung einer Schnittstelle einer Schweißstromquelle benötigt. Deshalb ist es von Vorteil, eine Anforderung für eine solche Funktion einer erfindungsgemäßen Prüfung zu unterziehen, um Fehler bei der Erstellung der Schnittstelle nach Möglichkeit zu vermeiden.

Vorteilhaft ist es, wenn die Schnittstelle als Satz von Programmierbefehlen repräsentiert ist und ein Programmierbefehl den zumindest einen internen Anschluss über eine Schnittstellenfunktion funktional mit dem zumindest einen externen Anschluss verknüpft. Die Zuordnung zwischen den externen Anschlüssen und den internen Anschlüssen erfolgt also über einen Programmcode. Beispielsweise kann ein Befehl vorgesehen sein, welcher einen internen Anschluss mit einem externen Anschluss verbindet, wobei die ausgetauschten Werte jeweils invertiert werden. Der Programmcode für die Definition der Schnittstelle kann in an sich bekannter Weise compiliert und in Folge ausgeführt oder direkt interpretiert werden.

Vorteilhaft ist es weiterhin, wenn die Schnittstelle als Tabelle repräsentiert ist, wobei eine Zelle der Tabelle dem zumindest einen internen Anschluss und/oder dem zumindest einen externen Anschluss der Schnittstelle zugeordnet ist und eine Schnittstellenfunktion enthält, welche den zumindest einen internen Anschluss funktional mit dem zumindest einen externen Anschluss verknüpft. Bei dieser Variante der Erfindung erfolgt die Programmierung der Schnittstelle nicht durch Programmcode im herkömmlichen Sinn, sondern durch gezieltes Beschreiben von Zellen einer Tabelle. Beispielsweise können die internen Anschlüsse den Zeilen und die externen Anschlüsse den Spalten zugeordnet sein. Wird eine Zelle mit einer bestimmten Schnittstellenfunktion beschrieben, so wird diese auf die der betreffenden Zeile und Spalte zugewiesenen Anschlüsse angewendet. Selbstverständlich kann diese Tabelle wiederum in einen Programmcode, so wie er zuvor beschrieben wurde, umgewandelt werden. Denkbar ist aber auch jede andere Methode zur Erstellung eines in der Schnittstelle ablaufenden Codes.

Besonders vorteilhaft ist es, wenn die Schnittstelle als graphisches Schnittstellensymbol ihres zumindest einen internen Anschlusses und ihres zumindest einen externen Anschlusses und die Schnittstellenfunktionen als graphische Schnittstellenfunktionssymbole repräsentiert sind, wobei ein Schnittstellenfunktionssymbol zwischen dem zumindest einen internen Anschluss und dem zumindest einen externen Anschluss des Schnittstellensymbols anordenbar ist, um den zumindest einen internen Anschluss über die zugeordnete Schnittstellenfunktion funktional mit dem zumindest einen externen Anschluss zu verknüpfen. Bei dieser Variante der Erfindung wird dem Programmierer einer Schnittestelle also ein GUI (Graphical User Interface) zur Verfügung gestellt. Durch Kombination verschiedener Schnittstellenfunktionssymbole, welche beispielsweise mit einer Computermaus, einer Tastatur, einem Tastenkreuz oder eine Joystick manipuliert werden können, kann eine gewünschten Schnittstellenfunktion realisiert werden. Diese graphische Anordnung kann wiederum in einen Programmcode, so wie er zuvor beschrieben wurde, umgewandelt werden. Denkbar ist aber auch jede andere Methode zur Erstellung eines in der Schnittstelle ablaufenden Codes.

Besonders vorteilhaft ist es dabei, wenn die äußerere Form der Schnittstellenfunktionssymbole so gestaltet ist, dass die Schnittstellenfunktionssymbole nach Art von Puzzle-Steinen zusammenpassen, wenn die zugeordneten Schnittstellenfunktionen funktional zueinander passen. Auf diese Weise wird dem Programmierer einer Schnittstelle schon beim oder vor dem Programmieren verdeutlicht, welche Schnittstellenfunktion zueinander passen und welche nicht. Ein aussichtsloser Versuch, zwei unpassende Schnittstellenfunktionen zu kombinieren, welcher durch die erfindungsgemäße Plausibilitätsprüfung abgewiesen wird, wird daher von vorneherein unterbleiben. Da die Unterscheidung der Schnittstellenfunktionssymbole nach der Form erfolgt, eignet sich diese Erfindungsvariante insbesondere zur Anwendung auf Schwarz-Weiß-Bildschirmen oder für farbenblinde Personen.

Besonders vorteilhaft ist es dabei auch, wenn die äußerere Form der Schnittstellenfunktionssymbole und des Schnittstellensymbols so gestaltet ist, dass die Schnittstellenfunktionssymbole und das Schnittstellensymbol nach Art von Puzzle-Steinen zusammenpassen, wenn die zugeordneten Schnittstellenfunktionen funktional zu dem zumindest einen internen Anschluss und/oder dem zumindest einen externen Anschluss passen. Hierbei wird dem Programmierer einer Schnittstelle in ganz ähnlicher, wie bereits oben beschriebener Weise verdeutlicht, welche Schnittstellenfunktion mit welchem internen oder externen Anschluss kombiniert werden kann und welche nicht.

Besonders vorteilhaft ist es auch, wenn die farbliche Erscheinung der Schnittstellenfunktionssymbole so gestaltet ist, dass die Schnittstellenfunktionssymbole farblich zusammenpassen, wenn die zugeordneten Schnittstellenfunktionen funktional zueinander passen. Ähnlich wie die Form eines Schnittstellenfunktionssymbols kann auch dessen Farbe dazu beitragen, dem Programmierer einer Schnittstelle anzuzeigen, welche Schnittstellenfunktionen kombiniert werden können und welche nicht. Selbstverständlich können Form und Farbe variiert werden, um die Unterschiede noch besser zu verdeutlichen, beziehungsweise den Umfang an Kombinationen zu erweitern. Beispielsweise können zwei gleich geformte aber verschiedenfarbige Schnittstellenfunktionssymbole verschiedenen Schnittstellenfunktionssymbolen zugeordnet sein.

Besonders vorteilhaft ist es auch, wenn die farbliche Erscheinung der Schnittstellenfunktionssymbole und des Schnittstellensymbols so gestaltet ist, dass die Schnittstellenfunktionssymbole und das Schnittstellensymbol farblich zusammenpassen, wenn die zugeordneten Schnittstellenfunktionen funktional zu dem zumindest einen internen Anschluss und/oder dem zumindest einen externen Anschluss passen. Hierbei wird dem Programmierer einer Schnittstelle in ganz ähnlicher, wie bereits oben beschriebener Weise verdeutlicht, welche Schnittstellenfunktion mit welchem internen oder externen Anschluss kombiniert werden kann und welche nicht.

An dieser Stelle wird angemerkt, dass sich die zum erfindungsgemäßen Verfahren genannten Varianten und die sich daraus ergebenden Vorteile gleichermaßen auf die erfindungsgemäße Schweißstromquelle und das erfindungsgemäße Computerprogrammprodukt beziehen. Dasselbe gilt natürlich auch umgekehrt. Die oben genannten Maßnahmen können zudem beliebig kombiniert werden.

Zum besseren Verständnis der Erfindung wird diese anhand der nachfolgenden Figuren näher erläutert.
- Fig. 1: eine schematische Darstellung einer Schweißmaschine bzw. eines Schweißgerätes;
- Fig. 2: eine schematische Darstellung eines Schweißroboters, welcher mit einer erfindungsgemäßen Schweißstromquelle verbunden ist;
- Fig. 3: die Schweißstromquelle aus Fig. 2 im Detail, wobei das Modell der Schweißstromquelle als Satz von Programmierbefehlen repräsentiert ist;
- Fig. 4: eine alternative Schweißstromquelle, wobei das Modell der Schweißstromquelle als Tabelle repräsentiert ist;
- Fig. 5: eine weitere alternative Schweißstromquelle, wobei das Modell der Schweißstromquelle als graphisches Symbol repräsentiert ist;
- Fig. 6: ein Beispiels einer Schweißstromquelle, bei dem ein Modell derselben über eine modellierte Schnittstelle mit einem Modell eines Schweißroboters verbunden ist;
- Fig. 7: ein Prinzipschaltbild einer erfindungsgemäßen Schweißstromquelle, bei der die Schnittstellenfunktionen als Satz von Programmierbefehlen repräsentiert sind;
- Fig. 8: ein Prinzipschaltbild einer erfindungsgemäßen Schweißstromquelle, bei der die Schnittstellenfunktionen als Tabelle repräsentiert sind;
- Fig. 9: ein Prinzipschaltbild einer erfindungsgemäßen Schweißstromquelle, bei der die Schnittstellenfunktionen als graphische Symbole repräsentiert sind;
- Fig. 10: ein erstes Beispiel wie graphische Schnittstellenfunktionssymbole nach Art eines Puzzles kombiniert werden können;
- Fig. 11: ein zweites Beispiel wie graphische Schnittstellenfunktionssymbole nach Art eines Puzzles kombiniert werden können mit einer anderen äußeren Form der Schnittstellenfunktionssymbole;
- Fig. 12: ein drittes Beispiel wie graphische Schnittstellenfunktionssymbole nach Art eines Puzzles kombiniert werden können mit drei kombinierten Schnittstellenfunktionssymbolen;
- Fig. 13: ein viertes Beispiel wie graphische Schnittstellenfunktionssymbole nach Art eines Puzzles kombiniert werden können mit seitlich verbundenen Schnittstellenfunktionssymbolen;
- Fig. 14: eine Zusammenfassung mehrerer Zweige von Schnittstellenfunktionssymbolen in einer Gruppe;
- Fig. 15: ein Beispiel für ein Schnittstellenfunktionssymbol mit der Funktion "Zustandszuweisung";
- Fig. 16: ein Beispiel für ein Schnittstellenfunktionssymbol mit der Funktion "Wertezuweigung";
- Fig. 17: ein Beispiel für ein Schnittstellenfunktionssymbol mit der Funktion "Einheitenumrechnung";
- Fig. 18: ein Beispiel für ein Schnittstellenfunktionssymbol mit der Funktion "Werteabfragen";
- Fig. 19: ein Beispiel für ein Schnittstellenfunktionssymbol mit der Funktion "Invertieren";
- Fig. 20: ein Beispiel für eine Schnittstellenfunktionssymbolgruppe mit der Funktion "Skalierung";
- Fig. 21: ein Beispiel für eine Schnittstellenfunktionssymbolgruppe mit der Funktion "Zeitabfrage";
- Fig. 22: ein Beispiel für eine Schnittstellenfunktionssymbolgruppe mit der Funktion "Zeitverzögerung";
- Fig. 23: ein Beispiel für eine Schnittstellenfunktionssymbolgruppe mit der Funktion "UND-Verknüpfung" und
- Fig. 24: ein Beispiel wie farblich gestaltete Schnittstellenfunktionssymbole kombiniert werden können und

- Fig. 25: ein Ausführungsbeispiel einer Konfigurierung der Schnittstelle vom Schweißgerät 1 aus.
Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

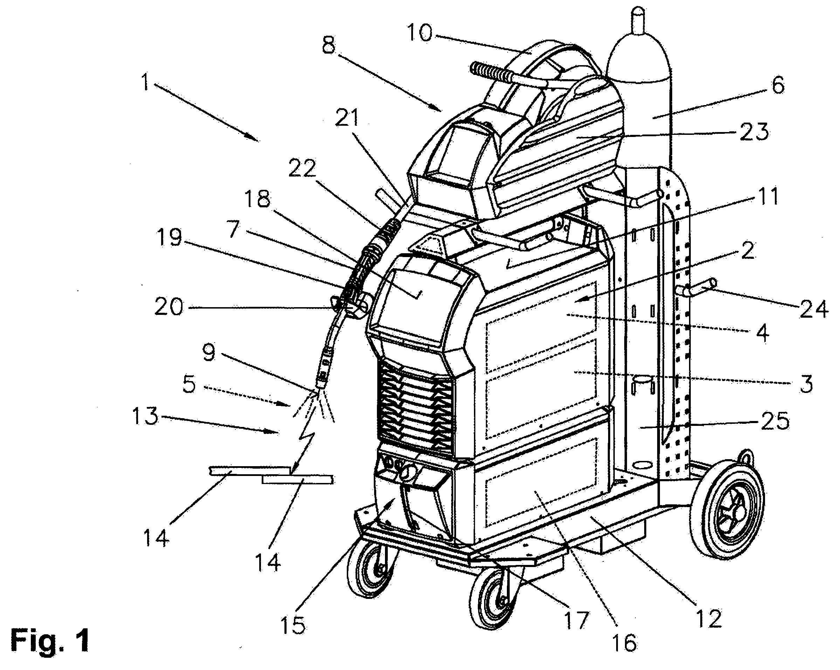

In Fig. 1 ist ein an sich bekanntes Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventile, usw. Die Steuervorrichtung 4 ist beispielsweise mit einem Steuerventilen verbunden, welches in einer Versorgungsleitung für ein Gas 5, insbesondere ein Schutzgas, wie beispielsweise CO2, Helium oder Argon und dgl., zwischen einem Gasspeicher 6 und einem Schweißbrenner 7 bzw. einem Brenner angeordnet ist.

Zudem kann über die Steuervorrichtung 4 noch ein Drahtvorschubgerät 8, welches häufig für das MIG/MAG-Schweißen verwendet wird, angesteuert werden, wobei über eine Versorgungsleitung ein Zusatzwerkstoff bzw. ein Schweißdraht 9 von einer Vorratstrommel 10 bzw. einer Drahtrolle in den Bereich des Schweißbrenners 7 zugeführt wird. Selbstverständlich ist es möglich, dass das Drahtvorschubgerät 8, wie es aus dem Stand der Technik bekannt ist, im Schweißgerät 1, insbesondere im Gehäuse 11 der Stromquelle 2, integriert ist und nicht, wie in Fig. 1 dargestellt, als Zusatzgerät auf eine Fahrwagen 12 positioniert ist. Hierbei wird von einem so genannten "Kompakten Schweißgerät" 1 gesprochen. Dabei ist es auch möglich, dass das Drahtvorschubgerät 8 direkt auf das Schweißgerät 2 aufgesetzt werden kann, d.h., dass das Gehäuse 11 der Stromquelle 2 auf der Oberseite zur Aufnahme des Drahtvorschubgerätes 8 ausgebildet ist, sodass der Fahrwagen 12 entfallen kann.

Es ist auch möglich, dass das Drahtvorschubgerät 8 den Schweißdraht 9 bzw. den Zusatzwerkstoff außerhalb des Schweißbrenners 7 an die Prozessstelle zuführt, wobei hierzu im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13, insbesondere eines Arbeitslichtbogens, zwischen der Elektrode bzw. dem Schweißdraht 9 und einem bevorzugt aus einem oder mehreren Teilen gebildeten Werkstück 14 wird dem Schweißbrenner 7, insbesondere der Elektrode bzw. dem Schweißdraht 9, über eine Schweißleitung (nicht dargestellt) vom Leistungsteil 3 der Stromquelle 2 zugeführt, wobei das zu verschweißende Werkstück 14 über eine weitere Schweißleitung für das weitere Potential, insbesondere das Masse-Kabel, mit der Stromquelle 2 (nicht dargestellt) verbunden ist und somit über den Lichtbogen 13 bzw. den gebildeten Plasmastrahl für einen Prozess ein Stromkreis aufgebaut werden kann. Bei Verwendung eines Brenners mit internen Lichtbogen 13 sind die beiden Schweißleitungen (nicht dargestellt) zum Brenner geführt, sodass im Brenner ein entsprechender Stromkreis aufgebaut werden kann, wie dies bei einem Plasma-Brenner der Fall sein kann.

Zum Kühlen des Schweißbrenners 7 kann der Schweißbrenner 7 über ein Kühlgerät 15 unter Zwischenschaltung ev. Komponenten, wie beispielsweise einem Strömungswächter, mit einem Flüssigkeitsbehälter, insbesondere einem Wasserbehälter 16 mit einer Füllstandsanzeige 17, verbunden werden, wodurch das Kühlgerät 15 bei der Inbetriebnahme des Schweißbrenners 7, insbesondere eine für die im Wasserbehälter 16 angeordnete Flüssigkeit verwendete Flüssigkeitspumpe, gestartet wird und somit eine Kühlung des Schweißbrenners 7 bewirkt werden kann. Wie bei dem dargestellten Ausführungsbeispiel gezeigt, wird das Kühlgerät 15 auf dem Fahrwagen 12 positioniert, auf das anschließend die Stromquelle 2 gestellt wird. Die einzelnen Komponenten der Schweißanlage, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Das Schweißgerät 1, insbesondere die Stromquelle 2, weist weiterhin eine Ein- und/oder Ausgabevorrichtung 18 auf, über die die unterschiedlichsten Schweißparameter, Betriebsarten oder Schweißprogramme des Schweißgerätes 1 eingestellt bzw. aufgerufen und angezeigt werden können. Dabei werden die über die Ein- und/oder Ausgabevorrichtung 18 eingestellten Schweißparameter, Betriebsarten oder Schweißprogramme an die Steuervorrichtung 4 weitergeleitet, und von dieser werden anschließend die einzelnen Komponenten der Schweißanlage bzw. des Schweißgerätes 1 angesteuert bzw. entsprechende Sollwerte für die Regelung oder Steuerung vorgegeben. Hierbei ist es auch möglich, dass bei Verwendung eines entsprechenden Schweißbrenners 7 auch Einstellvorgänge über den Schweißbrenner 7 vorgenommen werden können, wobei dazu der Schweißbrenner 7 mit einer Schweißbrenner-Ein- und/oder Ausgabevorrichtung 19 ausgestattet ist. Bevorzugt ist dabei der Schweißbrenner 7 über einen Datenbus, insbesondere einen seriellen Datenbus, mit dem Schweißgerät 1, insbesondere der Stromquelle 2 oder dem Drahtvorschubgerät 8 verbunden. Zum Starten des Schweißprozesses weist der Schweißbrenner 7 meist ein Startschalter, nicht dargestellt, auf, sodass durch Betätigen des Startschalters der Lichtbogen 13 gezündet werden kann. Um gegen die große Hitzeeinstrahlung vom Lichtbogen 13 geschützt zu werden, ist es möglich, dass der Schweißbrenner 7 mit einem Hitzeschutzschild 20 ausgestattet wird.

Weiterhin ist der Schweißbrenner 7 in dem dargestellten Ausführungsbeispiel über ein Schlauchpaket 21 mit dem Schweißgerät 1 bzw. der Schweißanlage verbunden, wobei das Schlauchpaket 21 über einen Knickschutz 22 am Schweißbrenner 7 befestigt ist. In dem Schlauchpaket 21 sind die einzelnen Leitungen, wie beispielsweise die Versorgungsleitung bzw. Leitungen für den Schweißdraht 9, für das Gas 5, für den Kühlkreislauf, für die Datenübertragung, usw., vom Schweißgerät 1 zum Schweißbrenner 7 angeordnet, wogegen das Masse-Kabel bevorzugt extra an der Stromquelle 2 angeschlossen wird. Das Schlauchpaket 21 wird über eine Kupplungsvorrichtung (nicht dargestellt) an der Stromquelle 2 oder dem Drahtvorschubgerät 8 angeschlossen, wogegen die einzelnen Leitungen im Schlauchpaket 21 mit einem Knickschutz am bzw. im Schweißbrenner 7 befestigt sind. Damit eine entsprechende Zugentlastung des Schlauchpaketes 21 gewährleistet ist, kann das Schlauchpaket 21 über eine Zugentlastungsvorrichtung (nicht dargestellt) mit dem Gehäuse 11 der Stromquelle 2 oder dem Drahtvorschubgerät 8 verbunden sein.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 7 als luftgekühlter Schweißbrenner 7 ausgeführt werden kann, sodass beispielsweise das Kühlgerät 15 entfallen kann. Weiterhin ist es möglich, dass noch weitere Teile bzw. Komponenten, wie beispielsweise ein Schleifschutz 23 am Drahtvorschubgerät 8 oder ein Optionsträger 24 an einer Haltevorrichtung 25 für den Gasspeicher 6, usw. angeordnet bzw. eingesetzt werden können.

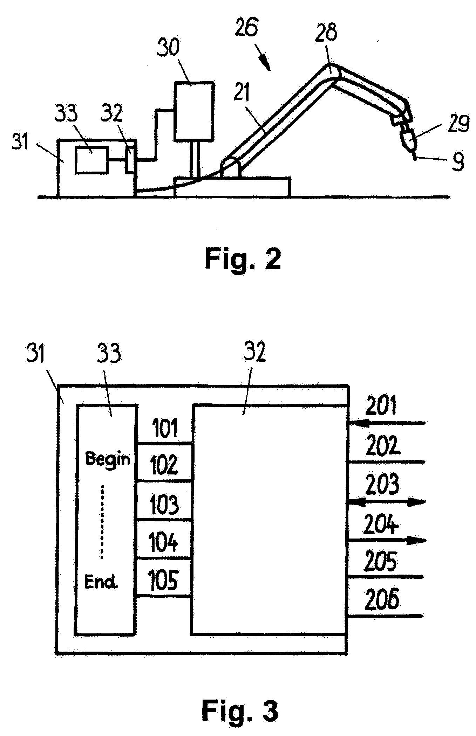

Fig. 2 zeigt nun stark vereinfacht einen Schweißroboter 26, mit einer Roboterbasis 27, einem Roboterarm 28 und einem Schweißkopf 29, aus dem ein Schweißdraht 9 herausragt. Der in der Fig. 2 dargestellte Schweißroboter 26 weist ein an sich bekanntes erstes Antriebssystem mit einer an sich bekannten Steuerung 30 für den Schweißkopf 29 auf. An den Schweißroboter 26 ist eine erfindungsgemäße Schweißstromquelle 31 mit einer durch einen Mikroprozessor/Mikrocontroller gebildeten Steuerung und einer damit verbundenen Schnittstelle 32 angeschlossen. Konkret ist der Schweißkopf 29 über ein Schlauchpaket 21 mit der Schweißstromquelle 31 verbunden. Darüber hinaus ist die Steuerung 30 des Schweißroboters 26 über die Schnittstelle 32 mit der Schweißstromquelle 31 verbunden. Zusätzlich kann der Schweißroboter 26 bzw. die Schweißstromquelle 31 die zu der Fig. 1 genannten Baugruppen in prinzipiell bekannter Zusammenstellung umfassen.

Fig. 3 zeigt nun ein vereinfachtes elektrisches beziehungsweise logisches Schaltbild der Schweißstromquelle 31 aus der Anordnung nach Fig. 2. Die Schweißstromquelle 31 umfasst eine Schnittstelle 32, welche fünf interne Anschlüsse 101..105 zu einem Prozessor 33 zur Steuerung der Schweißstromquelle 31 und sechs externe Anschlüsse 201..206 umfasst. Diese Anschlüsse 101..105 und 201..206 sind nicht notwendigerweise als eigenständige physikalisch vorhandene Leitungen ausgebildet. Vielmehr ist auch denkbar, dass diese logische Datenkanäle bilden, welche beispielsweise im Zeitmultiplex über eine serielle Kommunikationsverbindung übertragen werden.

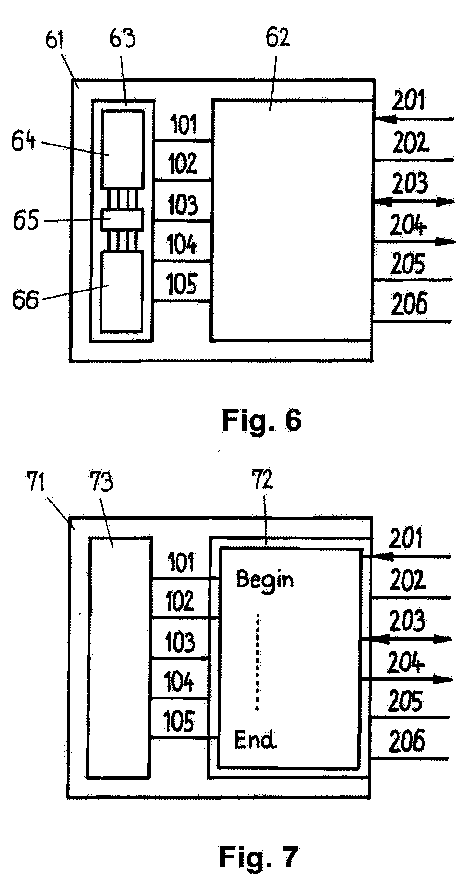

Im gezeigten Beispiel ist der externe Anschluss 201 als Eingang, der externe Anschluss 203 als Ein-/Ausgang (bidirektional) und der externe Anschluss 204 als Ausgang konfiguriert. Die übrigen externen Anschlüsse 202, 205 und 206 sind in diesem Beispiel nicht belegt. Die Zuordnung zwischen den externen Anschlüssen 201..206 und den internen Anschlüssen 101..105 erfolgt über eine Schnittstellendefinition, deren Erstellung im Detail in den Figuren 7 bis 9 vorgestellt wird.

Erfindungsgemäß umfasst ein Verfahren zur Steuerung einer Schweißstromquelle die Schritte:
- Erfassen zumindest eines Wertes für zumindest einen Betriebsparameter der Schweißstromquelle 31,
- Setzen des dieses zumindest einen Wertes in einem Modell der Schweißstromquelle 31,
- Prüfen a) der Auswirkungen dieses zumindest einen Wertes an einer realen Maschine 26, welche über eine Schnittstelle 32 mit dem Modell der Schweißstromquelle 31 verbunden ist, anhand einer von der Maschine 26 erhaltenen Rückmeldung, oder
- Prüfen b) der Auswirkungen dieses zumindest einen Wertes an einem Modell dieser Maschine 26, welches über ein Modell einer Schnittstelle 32 mit dem Modell der Schweißstromquelle 31 verbunden ist, und
- Setzten des zumindest einen Wertes in der realen Schweißstromquelle 31, wenn im Prüfschritt keine negativen Auswirkungen ermittelt wurden.

Im Folgenden wird die Variante a) anhand der Figuren 2 und 3 näher erläutert. Für die Variante b) wird auf die Figur 6 verwiesen.

Im gezeigten Beispiel läuft in der Steuerung 33, welche beispielsweise durch einen Mikroprozessor/Mikrocontroller gebildet wird und ganz allgemein für die Steuerung an sich bekannter Abläufe in einer Schweißstromquelle 31 zuständig ist, ein Programm ab, welches die Schweißstromquelle 31 modelliert. In der Fig. 3 ist dieses Programm durch eine nicht näher definierte durch die Anweisungen Begin und End begrenzte Befehlsfolge symbolisiert. Dieser Programmcode kann in an sich bekannter Weise compiliert oder interpretiert werden. Das Modell der Schweißstromquelle 31 ist also als Satz von Programmierbefehlen repräsentiert, wobei einem Betriebsparameter durch einen Programmierbefehl ein Wert zugewiesen wird.

Empfängt die Schweißstromquelle 31 eine Anforderung, einen Betriebsparameter der Schweißstromquelle 31 zu verändern, beispielsweise über ein Eingabegerät derselben oder über die Schnittstelle 32, so wird diese Anforderung nicht unmittelbar in der realen Schweißstromquelle umgesetzt, sondern erst in dem in der Steuerung 33 laufenden Modell ausgeführt. Beispielsweise kann so ein Schweißstrom, eine Schweißspannung oder ähnliches eingestellt werden, ohne dass dies zu einem realen Stromfluß über den Schweißdraht führen würde.

In einem weiteren Schritt werden die Auswirkungen dieses zumindest einen Wertes an der realen Maschine, im konkreten Beispiel am Schweißroboter 26 beziehungsweise an dessen Steuerung 30 überprüft. Die Steuerung 30 ist ja wie aus Fig. 2 ersichtlich über die Schnittstelle 32 mit der Schweißstromquelle 31 und somit auch mit dem in der Steuerung 33 laufenden Modell verbunden. Ein Setzen eines Betriebsparameters in diesem Modell führt daher zu einer Reaktion beziehungsweise zu einer Rückmeldung des Schweißroboters 26, welche wiederum über die Schnittstelle 32 empfangen wird. Erst wenn in diesem Prüfschritt keine negativen Auswirkungen ermittelt wurden, wird der gewählte Wert, also beispielsweise ein Schweißstrom, auch in der realen Schweißstromquelle 31 gesetzt. Vorteilhaft können so Einstellungen an der Schweißstromquelle 31 auf ungefährliche Weise geprüft werden, bevor sie tatsächlich real umgesetzt werden.

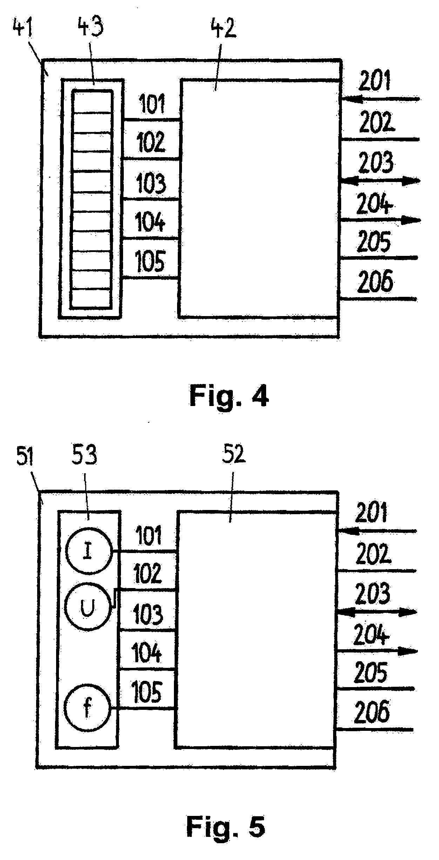

Fig. 4 zeigt nun eine alternative Ausführungsform einer Schweißstromquelle 41, welche der in Fig. 3 vorgestellten Schweißstromquelle 31 ganz ähnlich ist. Im Unterschied dazu, wird das Modell der Schweißstromquelle 41 aber nicht durch einen Programmcode, sondern als Tabelle repräsentiert, wobei eine Zelle der Tabelle einen Wert eines Betriebsparameters enthält. Beispielsweise kann eine Zelle für den Schweißstrom vorgesehen sein. Wird der Wert in der Zelle verändert, so wird entsprechend auch der Schweißstrom gesetzt, allerdings unter vorheriger Prüfung der Auswirkungen, wie dies zu Fig. 3 beschrieben wurde.

Fig. 5 zeigt eine weitere alternative Ausführungsform einer Schweißstromquelle 51, welche der in Fig. 3 vorgestellten Schweißstromquelle 31 ganz ähnlich ist. Im Unterschied dazu, wird das Modell der Schweißstromquelle 51 aber nicht durch einen Programmcode, sondern als graphisches Symbol und der zumindest eine Betriebsparameter als Eingabesymbol repräsentiert sind, wobei eine Eingabe des zumindest einen Wertes bei dem Eingabesymbol dem zumindest einen Betriebsparameter den genannten Wert zuweist. Konkret sind im vorliegenden Beispiel drei Eingabesymbole vorgesehen. Ein Eingabesymbol "I", welches mit dem internen Anschluss 101 verbunden und zum Setzen des Schweißstroms vorgesehen ist, ein Eingabesymbol "U", welches mit dem internen Anschluss 102 verbunden und zum Setzen der Schweißspannung vorgesehen ist und ein Eingabesymbol "f", welches mit dem internen Anschluss 105 verbunden und zum Setzen einer Umrichterfrequenz vorgesehen ist. Wird ein Eingabesymbol beziehungsweise der zugeordnete Wert verändert, so wird entsprechend auch der entsprechende Betriebsparameter gesetzt, wiederum unter vorheriger Prüfung der Auswirkungen, wie dies zu Fig. 3 beschrieben wurde. Die angegebenen Eingabesymbole sind natürlich nur rein beispielhaft zu sehen. Denkbar ist natürlich auch, dass weitere/andere Eingabesymbole für weitere/andere Betriebsparameter vorgesehen sind. Denkbar ist natürlich auch, dass diese anders geformt sind.

Fig. 6 zeigt eine weitere Möglichkeit wie die Auswirkungen einer Änderung eines Betriebsparameters geprüft werden können. Konkret wird eine Auswirkung dieses zumindest einen Wertes an einem Modell dieser Maschine 26, welches über ein Modell einer Schnittstelle 32 mit dem Modell der Schweißstromquelle 31 verbunden ist, geprüft. In der Fig. 6 ist dazu in der Steuerung 31, welche wiederum durch einen Mikroprozessor/Mikrocontroller gebildet ist, ein Modell 64 der Steuerung 63 der Schweißstromquelle 61 ein damit verbundenes Modell 65 der Schnittstelle 62 und ein damit verbundenes Modell 66 des Schweißroboters 26 beziehungsweise dessen Steuerung 30 dargestellt. Selbstverständlich müssen die genannten Modelle die betreffenden Geräte nicht allumfassend repräsentieren, sondern können auch bloß einen relevanten Ausschnitt daraus abbilden. Insbesondere gilt dies für das Modell 64 und das Modell 66.

Bei dieser Variante der Erfindungen können Einstellungen an einer Schweißstromquelle 61 also völlig in einer virtuellen Welt getestet werden, bevor diese in der realen Schweißstromquelle 61 gesetzt werden. Vorteilhaft kann der Test also auch ohne real vorhandenen Schweißroboter 26 erfolgen. Insbesondere kann das erfindungsgemäße Verfahren zur Steuerung der Schweißstromquelle 61 auch in einem PC ablaufen (der Block 63 kann dann als Prozessor des betreffenden PCs gesehen werden), wodurch Abläufe "offline", also völlig unabhängig von einer real vorhandenen Schweißstromquelle 61 und von einem real vorhandenen Schweißroboter 26 getestet werden können.

An dieser Stelle wird angemerkt, dass die Schritte des erfindungsgemäßen Verfahrens nicht notwendigerweise unmittelbar aufeinander abfolgen, sondern auch zeitlich verzögert sein können. Insbesondere gilt dies für den Schritt, dass der zumindest eine Wert in der realen Schweißstromquelle 31 gesetzt wird, etwa wenn die Programmierung wie oben beschrieben offline erfolgt und die Umsetzung in die Realität erst zu einem späteren Zeitpunkt erfolgt.

Fig. 7 zeigt nun ein erstes Beispiel für eine Schnittstelle 72 einer Schweißstromquelle 71, welche beispielsweise in einer Anordnung nach den Figuren 3 bis 5 verwendet werden könnte. Die Schnittstelle 72 umfasst wie bereits zuvor beschrieben fünf interne Anschlüsse 101..105 zum Prozessor 73 und sechs externe Anschlüsse 201..206. Diese Anschlüsse 101..105 und 201..206 sind nicht notwendigerweise als eigenständige physikalisch vorhandene Leitungen ausgebildet. Vielmehr ist auch denkbar, dass diese logische Datenkanäle bilden, welche beispielsweise im Zeitmultiplex über eine serielle Kommunikationsverbindung übertragen werden.

Im gezeigten Beispiel ist der externe Anschluss 201 wie bereits beschrieben als Eingang, der externe Anschluss 203 als Ein-/Ausgang (bidirektional) und der externe Anschluss 204 als Ausgang konfiguriert. Die übrigen externen Anschlüsse 202, 205 und 206 sind in diesem Beispiel nicht belegt. Die externen Anschlüsse 201, 203 und 204 sind den internen Anschlüssen 101, 102 und 105 zugewiesen. Die internen Anschlüsse 103 und 104 sind in diesem Beispiel nicht belegt. Die Zuordnung zwischen den externen Anschlüsse 201, 203 und 204 und den internen Anschlüssen 101, 102 und 105 erfolgt über einen Programmcode. Beispielsweise kann ein Befehl vorgesehen sein, welcher den internen Anschluss 101 mit dem externen Anschluss 201 verbindet. Weiterhin ist denkbar, dass ein Befehl vorgesehen ist, welcher den internen Anschluss 102 mit dem externen Anschluss 203 verbindet, wobei die ausgetauschten Werte jeweils invertiert werden. Schließlich ist vorstellbar, dass ein weiterer Befehl vorgesehen ist, welcher den internen Anschluss 105 mit dem externen Anschluss 204 verbindet, wobei die ausgetauschten Werte mit zwei multipliziert werden. Selbstverständlich sind die angegebenen Verknüpfungen rein illustrativ zu sehen. Denkbar ist natürlich auch jede andere Verknüpfung.

Die Schnittstelle 71 ist also als Satz von Programmierbefehlen repräsentiert, wobei ein Programmierbefehl einen internen Anschluss 101, 102 und 105 über eine Schnittstellenfunktion funktional mit einem externen Anschluss 201, 203 und 204 verknüpft. In der Fig. 7 ist dies durch eine nicht näher definierte durch die Anweisungen Begin und End begrenzte Befehlsfolge symbolisiert. Dieser Programmcode kann in an sich bekannter Weise compiliert oder interpretiert werden.

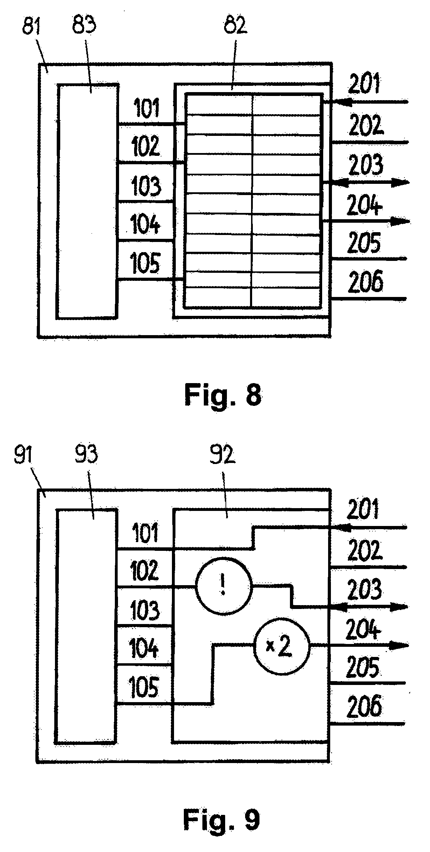

Fig. 8 zeigt eine alternative Ausführungsform einer erfindungsgemäßen Schweißstromquelle 81, welcher der in Fig. 7 gezeigten Schweißstromquelle 71 sehr ähnlich ist. Im Unterschied dazu, werden die internen Anschlüssen 101, 102 und 105 und die externen Anschlüsse 201, 203 und 204 aber nicht über einen Programmcode, sondern über eine Tabelle miteinander verknüpft. Die Schnittstelle 82 ist also als Tabelle repräsentiert, wobei eine Zelle der Tabelle einem internen Anschluss 101, 102 und 105 und/oder einem externen Anschluss 201, 203 und 204 der Schnittstelle zugeordnet ist und eine Schnittstellenfunktion enthält, welche einen internen Anschluss 101, 102 und 105 funktional mit einem externen Anschluss 201, 203 und 204 verknüpft. Beispielsweise können die internen Anschlüsse 101..105 den Zeilen der Tabelle, die externen Anschlüsse 201..206 den Spalten zugeordnet sein. Wird nun eine Zelle am Kreuzungspunkt einer bestimmten Zeile und einer bestimmten Spalte mit einer Schnittstellenfunktion beschrieben, so werden der betreffende interne Anschluss 101..105 und der betreffende externe Anschluss 201..206 über die entsprechende Schnittstellenfunktion funktional miteinander verknüpft.

Um beim vorigen Beispiel zu bleiben kann in der dem internen Anschluss 101 und dem externen Anschluss 201 zugeordneten Zelle eine "1" eingetragen werden, um diese zu verbinden. Gleichermaßen kann in der dem internen Anschluss 102 und dem externen Anschluss 203 zugeordneten Zelle eine "-1" eingetragen werden, um diese zu verbinden und die übertragenen Werte zu invertieren. Weiterhin kann in der dem internen Anschluss 105 und dem externen Anschluss 204 zugeordneten Zelle "x2" eingetragen werden, um diese zu verbinden und die ausgetauschten Werte mit Zwei zu multiplizieren.

Fig. 9 zeigt eine alternative Ausführungsform einer erfindungsgemäßen Schweißstromquelle 91, welcher der in Fig. 7 gezeigten Schweißstromquelle 71 wiederum sehr ähnlich ist. Im Unterschied dazu, werden die internen Anschlüssen 101, 102 und 105 und die externen Anschlüsse 201, 203 und 204 aber nicht über einen Programmcode, sondern über graphische Symbole miteinander verknüpft.

Die Schnittstelle 92 ist also als graphisches Schnittstellensymbol ihrer internen Anschlüsse 101..105 und ihrer externen Anschlüsse 201..206, und die Schnittstellenfunktionen sind als graphische Schnittstellenfunktionssymbole repräsentiert. Ein Schnittstellenfunktionssymbol ist zwischen den internen Anschlüssen 101..105 und den externen Anschlüssen 201..206 des Schnittstellensymbols anordenbar, um einen internen Anschluss 101..105 über die zugeordnete Schnittstellenfunktion funktional mit einem externen Anschluss 201..206 zu verknüpfen.

Konkret wird der interne Anschluss 101 im vorliegenden Beispiel über das graphische Symbol "Linie" mit dem externen Anschluss 201 verbunden, sodass zwischen dem interne Anschluss 101 und dem externen Anschluss 201 Daten übertragen werden können. Weiterhin wird der interne Anschluss 102 über das graphische Symbol "!" mit dem externen Anschluss 203 verbunden, sodass zwischen dem internen Anschluss 102 und dem externen Anschluss 203 Daten übertragen werden können, welche bei der Übertragung aber invertiert werden. Schließlich wird der interne Anschluss 105 über das graphische Symbol "x2" mit dem externen Anschluss 204 verbunden, sodass zwischen dem internen Anschluss 105 und dem externen Anschluss 204 Daten übertragen werden können, welche bei der Übertragung mit Zwei multipliziert werden.

Erfindungsgemäß wird nun eine Anforderung, einen internen Anschluss 101..105 über eine Schnittstellenfunktion, welche aus einem Satz von Schnittstellenfunktionen ausgewählt wird, funktional mit einem externen Anschluss 201..206 zu verknüpfen, auf Plausibilität überprüft. Erst wenn das Ergebnis der Plausibilitätsprüfung positiv ist, wird die Anforderung ausgeführt. Diese Plausibilitätsprüfung kann an sich an beliebiger Stelle im Verfahrensablauf erfolgen, beispielsweise beim Compilieren, Ausführen oder Interpretieren des Codes, beim Ausführen der in der Tabelle eingetragenen Schnittstellenfunktionen oder beim Ausführen der graphisch repräsentierten Schnittstellenfunktionen. Besonders vorteilhaft ist es aber, wenn diese Plausibilitätsprüfung schon beim Editieren des Codes, der Tabelle oder der graphisch repräsentierten Schnittstelle erfolgt. Beispielsweise können Befehlsfolgen, Schnittstellenfunktionen oder Symbole, welche nicht plausibel sind, farbig markiert werden.

Als Schnittstellenfunktionen können zum Beispiel vorgesehen sein:
- Zuweisung eines internen Anschlusses 101..105 zu einem externen Anschluss 201..206
- Skalierung eines zwischen dem zumindest einen internen Anschluss 101..105 und dem zumindest externen Anschluss 201..206 übermittelten Wertes
- Umrechnung einer Einheit eines derart übermittelten Wertes
- Umwandlung eines Datenformats eines derart übermittelten Wertes
- Invertieren eines derart übermittelten Wertes
- Zeitverzögerung eines derart übermittelten Wertes.

Die zur Steuerung der Schweißstromquelle 31, 41, 51, 61, 71, 81. 91 vorgesehenen Betriebsparameter, deren Werte auch über die Schnittstelle 32, 42, 52, 62, 72, 82, 92 übermittelten werden können sind beispielsweise:
- Schweißstrom
- Schweißspannung
- Stromfrequenz
- Pulsfrequenz
- Pulsdauer
- Puls-Breiten-Verhältnis
- Betriebszustand
- Systemzeit

Neben der direkten Programmierung der (physischen) Schnittstelle 32, 42, 52, 62, 72, 82, 92 ist es auch möglich, eine Schnittstellendefinition anhand eines Modells der Schnittstelle 32, 42, 52, 62, 72, 82, 92 und eines damit verbundenen Modells einer damit verbundenen Maschine (im konkreten Beispiel also anhand eines Modells des Schweißroboters 26 beziehungsweise anhand eines Modells seiner Steuerung 30) zu erstellen, welche auf Plausibilität geprüft wird. Erst wenn das Ergebnis der Plausibilitätsprüfung positiv ist, wird die Schnittstellendefinition in die reale Schnittstelle 32, 42, 52, 62, 72, 82, 92 übertragen. Selbstverständlich können auch bei dieser Variante wie bereits zuvor erwähnt schon beim Erstellen bzw. Editieren der Schnittstellendefinition im Modell Plausibilitätsprüfungen für die einzelnen Anforderungen von Schnittstellendefinitionen erfolgen.

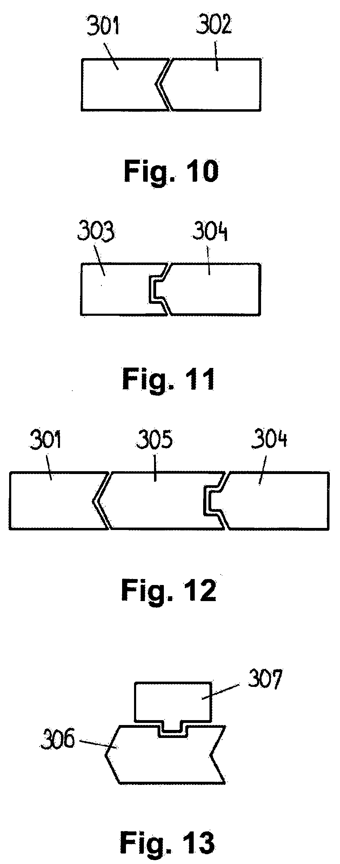

Vorteilhaft ist es nun, wenn die äußerere Form der Schnittstellenfunktionssymbole so gestaltet ist, dass die Schnittstellenfunktionssymbole nach Art von Puzzle-Steinen zusammenpassen, wenn die zugeordneten Schnittstellenfunktionen funktional zueinander passen. Gleichermaßen ist es von Vorteil, wenn die äußerere Form der Schnittstellenfunktionssymbole und des Schnittstellensymbols so gestaltet ist, dass die Schnittstellenfunktionssymbole und das Schnittstellensymbol nach Art von Puzzle-Steinen zusammenpassen, wenn die zugeordneten Schnittstellenfunktionen funktional zu dem zumindest einen Eingang und/oder dem zumindest einen Ausgang passen. Die Figuren 10 bis 23 zeigen einige Beispiele hierfür.

Fig. 10 zeigt eine beispielhafte Kombination eines Schnittstellenfunktionssymbols 301 mit einem Schnittstellenfunktionssymbol 302. Das Schnittstellenfunktionssymbol 302 hat auf der linken Seite ein pfeilförmiges Ende, welches in eine entsprechende Vertiefung im Schnittstellenfunktionssymbol 301 passt. Auf diese Weise ist schon beim Zusammenfügen der Schnittstellenfunktionssymbole, also beim Erstellen bzw. Editieren einer Schnittstellendefinition, erkennbar, welche Schnittstellenfunktionssymbole zusammenpassen und welche nicht. Durch die pfeilförmige Ausformung kann auch ein Signalverlauf, hier von rechts nach links, visualisiert sein, um das Erstellen einer Schnittstellendefinition noch weiter zu vereinfachen. Prinzipiell kann der Signalfluss in der Fig. 10 aber auch von links nach rechts verlaufen.

Fig. 11 zeigt eine weitere beispielhafte Kombination eines Schnittstellenfunktionssymbols 303 mit einem Schnittstellenfunktionssymbol 304. Das Schnittstellenfunktionssymbol 304 hat auf der linken Seite ein pfeilförmiges Ende mit einem zapfenförmigen Fortsatz, das Schnittstellenfunktionssymbol 303 ein entsprechend gegengleich geformtes Ende. Die zu Fig. 10 genannten Vorteile gelten hier sinngemäß.

Fig. 12 zeigt nun eine Kombination von drei Schnittstellenfunktionssymbolen 301, 305 und 304. Das Schnittstellenfunktionssymbol 305 ermöglicht dabei die Kombination der bereits in den Figuren 10 und 11 gezeigten Schnittstellenfunktionssymbole 301 und 304.

In Fig. 13 ist darüber hinaus angedeutet, dass die Kombination von Schnittstellenfunktionssymbolen nicht nur horizontal sondern auch in vertikaler Richtung erfolgen kann. Rein beispielhaft ist ein Schnittstellenfunktionssymbol 306 mit einer oben angeordneten, rechteckförmigen Einbuchtung gezeigt, in welche ein zapfenförmiger Fortsatz eines Schnittstellenfunktionssymbols 307 ragt.

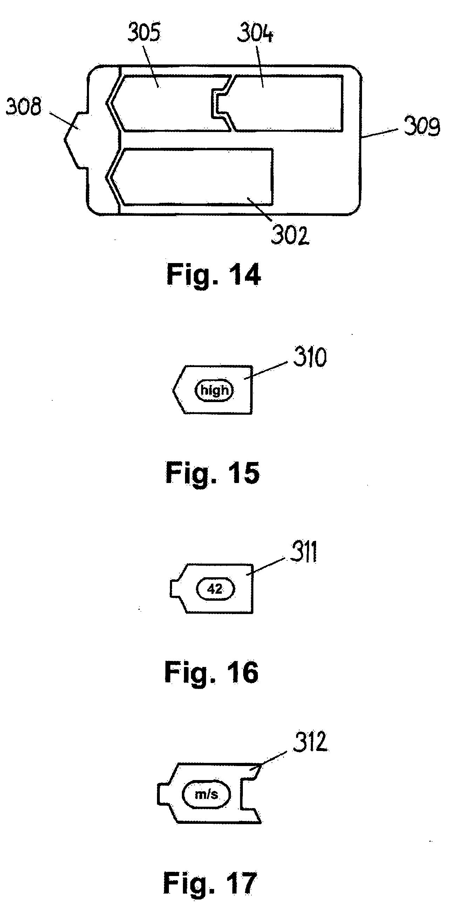

Fig. 14 zeigt weiterhin, dass verschiedene Stränge von Schnittstellenfunktionssymbolen auch zusammengefasst werden können. Rein beispielhaft werden das Schnittstellenfunktionssymbol 305, welches mit dem Schnittstellenfunktionssymbol 304 verbunden ist, und das Schnittstellenfunktionssymbol 302 über das Schnittstellenfunktionssymbol 308 zusammengeführt. Zusätzlich wird mit dem Symbol 309 eine aus den Schnittstellenfunktionssymbolen 302, 304, 305 und 308 bestehende Gruppe gebildet.

An dieser Stelle wird angemerkt, dass in den vorangegangenen Ausführungen bis jetzt lediglich dargestellt wurde, wie die Schnittstellenfunktionssymbole 301..309 miteinander kombiniert werden können, nicht aber wie sie mit einem Schnittstellensymbol zusammenwirken. Beispielsweise kann die Darstellung eines internen Anschlusses 101..105 oder eines externen Anschlusses 201..206 eine pfeilförmige Einbuchtung (wie das Schnittstellenfunktionssymbol 301) oder eine pfeilförmige Ausbuchtung (wie das Schnittstellenfunktionssymbol 302) aufweisen, um die Möglichkeit der Kombination mit dem Schnittstellenfunktionssymbol 302 beziehungsweise mit dem Schnittstellenfunktionssymbol 301 anzuzeigen.

In den vorangegangenen Ausführungen wurde darüber hinaus bis jetzt lediglich dargestellt, wie die Schnittstellenfunktionssymbole aussehen könnten, damit sie nach Art eines Puzzles kombiniert werden können. Eine Zuordnung der Schnittstellenfunktionssymbole zu Schnittstellenfunktionen ist aber noch nicht erfolgt. Daher wird in den folgenden Figuren gezeigt, welche Schnittstellenfunktionssymbole welche Schnittstellenfunktion repräsentieren können.

In Fig. 15 wird beispielsweise das bereits aus der Fig. 10 grundlegend bekannte Schnittstellenfunktionssymbol 302 zu einem Schnittstellenfunktionssymbol 310 erweitert, das rein beispielhaft zur Zuweisung eines Zustands dient. Konkret wird dem internen Anschluss 101..105 oder externen Anschluss 201..206 der Schnittstelle 32, 42, 52, 62, an dem das Schnittstellenfunktionssymbol 310 angefügt wird, der Zustand "high" zugewiesen.

In ähnlicher Weise wird in Fig. 16 das bereits aus der Fig. 11 grundlegend bekannte Schnittstellenfunktionssymbol 304 zu einem Schnittstellenfunktionssymbol 311 erweitert, das rein beispielhaft zur Zuweisung eines Wertes dient. Konkret wird dem internen Anschluss 101..105 oder externen Anschluss 201..206 der Schnittstelle 32, 42, 52, 62, an dem das Schnittstellenfunktionssymbol 311 angefügt wird, der Wert "42" zugewiesen.

In Fig. 17 ist nun ein Schnittstellenfunktionssymbol 312 dargestellt, das rein beispielhaft zur Umrechnung von Einheiten dient. Konkret werden über die Schnittstelle 32, 42, 52, 62 übertragene Werte durch Verwendung des Schnittstellenfunktionssymbols 312 in "m/s" umgerechnet (beispielsweise von inch/s).

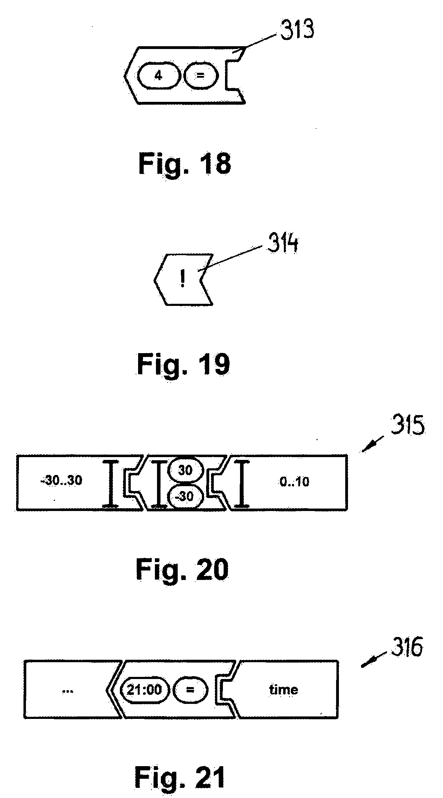

Das in Fig. 18 dargestellte Schnittstellenfunktionssymbol 313 dient rein beispielhaft der Abfrage von Werten. Exemplarisch ergibt sich ein auf der rechten Seite des Schnittstellenfunktionssymbols 313 eingespeister Wert zu "4".

Fig. 19 zeigt nun ein Schnittstellenfunktionssymbol 314 zum Invertieren von Werten. Wird zum Beispiel auf der rechten Seite des Schnittstellenfunktionssymbols 314 der Wert "0" eingespeist, so gibt die dem Schnittstellenfunktionssymbol 314 zugeordnete Schnittstellenfunktion den Wert "1" aus.

Fig. 20 zeigt beispielhaft eine Anordnung 315 von Schnittstellenfunktionssymbolen, die zum Skalieren von Werten dient. Beispielsweise wird ein auf der rechten Seite der Anordnung 315 eingespeister Wertebereich von 0..10 auf der linken Seite auf -30..30 abgebildet.

Fig. 21 zeigt weiterhin eine beispielhafte Anordnung 316 zur Abfrage einer Systemzeit "time". Konkret wird die Systemzeit "21:00" ausgelesen. Dieser Wert kann dann beispielsweise beliebig weiter verarbeitet werden. Beispielsweise können so die Schweißstromquelle 31 und die Steuerung 30 des Schweißroboters 26 zeitlich synchronisiert werden.

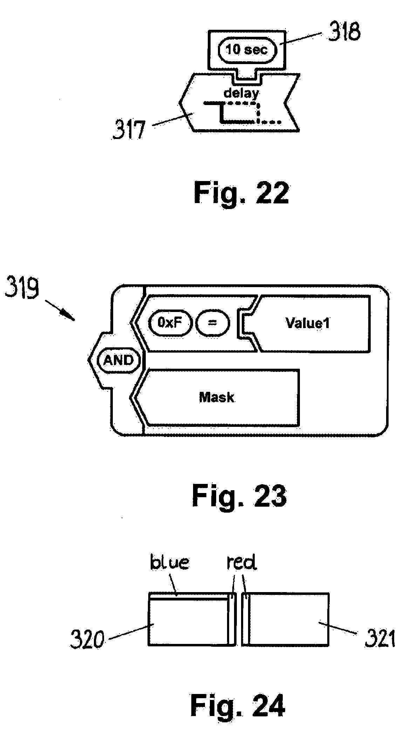

In Fig. 22 werden die bereits aus der Fig. 13 grundlegend bekannten Schnittstellenfunktionssymbole 306 und 307 zu Schnittstellenfunktionssymbolen 317 und 318 erweitert. Die gezeigte Anordnung dient rein beispielhaft zur zeitlichen Verzögerung bei der Übermittlung eines Wertes. Konkret wird ein auf der rechten Seite des Schnittstellenfunktionssymbols 317 eingespeister Wert um 10 Sekunden verzögert, bevor er an der linken Seite ausgegeben wird.

Fig. 23 zeigt beispielhaft eine Anordnung 319 von Schnittstellenfunktionssymbolen, welche die Anordnung aus Fig. 14 als Basis hat. Konkret wird ein Wert "Valuel" ausgelesen, welcher den Hexadezimalwert "0xF" hat. Dieser wird mit einer Maske "Mask" UND-verknüpft. 0Das Ergebnis wird auf der linken Seite der Anordnung 319 ausgegeben.

In den Figuren 10 bis 23 wurden Schnittstellenfunktionssymbole gezeigt, die nach Art von Puzzle-Steinen zusammenpassen, wenn die zugeordneten Schnittstellenfunktionen funktional zueinander passen. Denkbar ist aber auch, dass die farbliche Erscheinung der Schnittstellenfunktionssymbole so gestaltet ist, dass die Schnittstellenfunktionssymbole farblich zusammenpassen, wenn die zugeordneten Schnittstellenfunktionen funktional zueinander passen. Gleichermaßen ist vorstellbar, dass die farbliche Erscheinung der Schnittstellenfunktionssymbole und des Schnittstellensymbols so gestaltet ist, dass die Schnittstellenfunktionssymbole und das Schnittstellensymbol farblich zusammenpassen, wenn die zugeordneten Schnittstellenfunktionen funktional zu dem zumindest einen Eingang und/oder dem zumindest einen Ausgang passen.

Fig. 24 zeigt ein Beispiel hierfür, und zwar in Form eines Schnittstellenfunktionssymbols 320, welches mit einem Schnittstellenfunktionssymbol 321 kombiniert ist. Das Schnittstellenfunktionssymbol 320 ist am rechten Rand farblich rot, am oberen Rand farblich blau gestaltet. Das Schnittstellenfunktionssymbol 321 ist dagegen am linken Rand rot gestaltet. Es wird angenommen, dass die Schnittstellenfunktionssymbole 320 und 321 ansonsten farbneutral sind. Auch hier ist für einen Nutzer des erfindungsgemäßen Verfahrens sofort erkennbar, dass das Schnittstellenfunktionssymbol 320 mit dem Schnittstellenfunktionssymbol 321 kombiniert werden kann, auch wenn die Form der Schnittstellenfunktionssymbole 320 und 321 an sich keinen Aufschluss darüber gibt.

Die in der Fig. 24 dargestellte Anordnung ist rein illustrativ zu sehen. Neben der gezeigten Farbgestaltung können Schnittstellenfunktionssymbole beliebig komplex farblich gestaltet sein, um die Möglichkeit der Kombination mit einem anderen Schnittstellenfunktionssymbol anzuzeigen.

Selbstverständlich können Schnittstellenfunktionssymbole sowohl nach Art eines Puzzle-Steins als auch farblich differenziert gestaltet sein, sodass besonders leicht erkennbar ist, welches Schnittstellenfunktionssymbol mit welchem anderen Schnittstellenfunktionssymbol beziehungsweise mit welchem internen Anschluss 101..105 oder externen Anschluss 201..206 kombiniert werden kann.

Generell kann die Programmierung der Schnittstelle 32, 42, 52, 62, 72, 82, 92 - egal ob diese als Programmcode, Tabelle oder durch graphische Symbole repräsentiert ist- sowohl direkt an der Schweißstromquelle 31, 41, 51, 61, 71, 81, 91 oder an einem abgesetzten Personal Computer erfolgen. Bei letzterem wird die Schnittstellendefinition anhand eines Modells der Schnittstelle 32, 42, 52, 62, 72, 82, 92 und eines damit verbundenen Modells der mit der Schweißstromquelle 31, 41, 51, 61, 71, 81, 91 verbundenen Maschine erstellt. Die Programmierung erfolgt somit "offline", wodurch teure Stillstandzeiten der Schweißstromquelle 3131, 41, 51, 61, 71, 81, 91 bzw. der damit verbundenen Maschine (z.B. des Schweißroboters 26) vermieden werden können. Desgleichen ist es möglich, die Schnittstellendefinition schon vor der Installation der Schweißstromquelle 31, 41, 51, 61, 71, 81, 91 bzw. des Schweißroboters 26 zu erstellen, sodass die Inbetriebnahme rasch erfolgen kann. Letztlich ist es auch möglich, die Schnittstelle 32, 42, 52, 62, 72, 82, 92 von der Ferne aus zu warten. Kostspielige Reisen von Fachpersonal können somit vermieden werden.

Abschließend wird angemerkt, dass der Schweißroboter 26 nur eine Ausführungsform einer an eine Schweißstromquelle 31, 41, 51, 61, 71, 81, 91 angeschlossenen Maschine ist. Auch kann der Schweißroboter 26 eine andere Bauform haben. Beispielsweise kann dieser als Portalroboter ausgeführt sein.

Die Ausführungsbeispiele zeigen mögliche Ausführungsvarianten einer erfindungsgemäßen Schweißstromquelle 31, 41, 51, 61, 71, 81, 91, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Insbesondere wird festgehalten, dass die Schnittstelle 32, 42, 52, 62, 72, 82, 92 auch mit weiteren, zusätzlich zu der eigentlichen Stromquelle vorhandenen Aggregaten, welche gewöhnlich zum Schweißen benötigt werden, verbunden sein kann. Beispielsweise kann die Schnittstelle 32, 42, 52, 62, 72, 82, 92 mit Magnetventilen, Druckreglern und dergleichen für die Steuerung eines Schweißgasstroms oder mit Pumpen und Gebläsen zur Kühlung des Schweißbrenners usw. verbunden sein. In diesem Sinne ist unter einer Schweißstromquelle 31, 41, 51, 61, 71, 81, 91 nicht nur eine Stromquelle als solche zu verstehen, sondern auch eine Stromquelle mit Zusatzaggregaten. Insbesondere kann die erfindungsgemäße Schweißstromquelle 31, 41, 51, 61, 71, 81, 91 die zu der Fig. 1 aufgeführten Merkmale umfassen, welche in einer besonderen Ausführungsform auch mit der erfindungsgemäßen Schnittstelle 32, 42, 52, 62, 72, 82, 92 verbunden sein können.

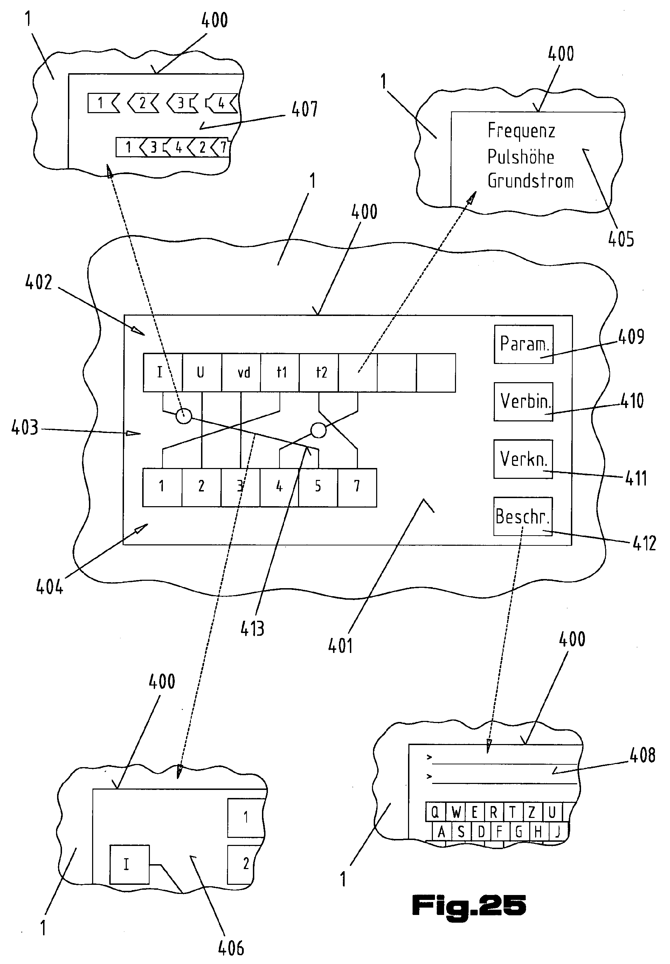

In Fig. 25 ist eine schematische Darstellung zur Konfigurierung der Schnittstelle über ein Bedienpanel 400 der Ein- und/oder Ausgabevorrichtung 19 direkt vom Schweißgerät 1 aus in vereinfachter Form dargestellt. Der Unterschied zu den in den zuvor beschriebenen Ausführungsformen liegt nun darin, dass bei dieser Anwendung keine internen Anschlüsse 101...105 vorhanden sind, sondern die Zuordnung direkt erfolgt. Hierzu wurde eine Vergrößerung des Bedienpanels 400 beispielsweise von der in Fig. 1 gezeigten Schweißanlage gezeigt. Es wird darauf hingewiesen, dass der Ablauf und die Ausbildung sowie Funktionsweise nur als Beispiel für die Offenbarung der Anwendung am Schweißgerät 1 gezeigt wird, jedoch eine Umsetzung auch anders möglich ist.

Bevorzugt wird als Bedienpanel 400 ein Touchscreen eingesetzt, sodass der Benutzer lediglich durch Berühren diverse Anzeigeelemente auswählen kann. Auch ist es möglich, dass sich der Benutzer die Oberfläche frei gestallten kann, d.h., dass der Benutzer die einzelnen Felder, Symbole, Graphiken, Texte usw. durch Anklicken und Verschieben neu positionieren kann, wobei hierzu der Benutzer die Steuervorrichtung 4 bzw. das Schweißgerät 1 in einem dafür vorgesehen Modus umschaltet. Auch ist es möglich, dass dieser Modus, insbesondere ein Positioniermodus durch mehrmaliges rasches Antippen eines Feldes, eines Symbols, einer Graphik usw. aufgerufen wird oder das durch längeres draufhalten dies eingeleitet wird. Wesentlich ist, dass der Benutzer durch Aufruf eines entsprechenden Menüs, insbesondere eines Schnittstellen-Modis, die Möglichkeit erhält, direkt am Schweißgerät 1 eine Konfigurierung der im Schweißgerät 1 angeordneten Schnittstelle (nicht dargestellt) vornehmen zu können. Dazu ist im Schweißgerät 1 eine frei konfigurierbaren Schnittstelle angeordnet, wobei die Schnittstelle softwaremäßig direkt über das Bedienpanel 400 der Schweißstromquelle angesteuert, konfiguriert und aktiviert wird.

Hierzu zeigt Fig. 25 beispielsweise ein Hauptmenü 401 des Bedienpanels 400 im Schnittstellen-Modus mit einem Parameterbereich 402 zur Definition der benötigen Parameter, einen Verknüpfungsbereich 403 und einen Ausgangsbereich 404 der externen Anschlüsse, sowie symbolhaft sich öffnende Untermenüs 405 bis 408 (welche nur auszugsweise dargestellt sind), aus denen der Benutzer dann mehrere Möglichkeiten auswählen kann, die ins Hauptmenü 401 übernommen werden. Weiters sind Buttons zum Aufrufen unterschiedlicher Funktion, wie beispielsweise Parameter 409, Verbinden 410, Verknüpfen 411 und Beschreiben 412, vorhanden, bei denen wiederum die oder andere Untermenüs 405 bis 408 aufgerufen werden. Diese Funktionen können jedoch auch dann aufgerufen werden, wenn der Benutzer auf die Darstellungen drückt, sodass eine entsprechend hinterlegte Funktion aufgerufen wird.

Der Benutzer hat nun die Möglichkeit einen beliebigen Parameter des Schweißgerätes 1 aus dem Parameterbereich 402 zu einem beliebigen externen Anschluss 101...105 des Anschlussbereichs 404 zuzuweisen und diesen zu verändern, in dem er einfach im Parameterbereich 402 ein entsprechendes Symbol drückt, worauf ein Untermenü 405 mit einer Liste von Parametern geöffnet wird. Aus dieser Liste wählt er durch einfaches Anklicken den Parameter aus, worauf am Symbol im Hauptmenü 401 dieser Parameter oder eine Abkürzung davon angezeigt wird. Dieselbe Funktion könnte auch über den Button Parameter 79 durchführt werden.

Nachdem der Benutzer einen oder alle Parameter ausgewählt hat, kann er jeden Parameter einen externen Anschluss zuweisen. Beispielsweise kann bei Betätigen des Button "Verbinden" 410 der Verknüpfungsbereich 403, insbesondere das Untermenü 406, aktiviert werden, sodass der Benutzer nun frei entscheiden kann, welchen ausgewählten Parameter im Parameterbereich 402 welchen externen Ausgang im Ausgangsbereich 404 zugeordnet wird und dies dann graphisch im Form von Verbindungslinien 413 dargestellt wird, d.h., dass beispielsweise der Parameter "I" (Schweißstrom) im Parameterbereich 402 dem externen Ausgang "5" im Ausgangsbereich 404 vom Benutzer zugeordnet wird, in dem er beide Symbole anklickst, und nach Abschluss des Vorganges die Verbindungslinie 413 dargestellt wird, sodass der Benutzer eine optische Darstellung erhält.

Weiters hat der Benutzer noch die Möglichkeit zum Erstellen einer Verknüpfung durch aneinander reihen von softwaremäßigen Graphiksymbole, wozu er auf den Button "Verknüpfen" 411 oder auf die Verbindungslinie 413 drückt. Dadurch wird wiederum ein Untermenü 407 aufgerufen, wo dem Benutzer die verschiedenen Graphiksymbole angezeigt werden. Dabei ist es möglich, dass durch einfaches draufdrücken und anschließendem Verschieben die Symbole aneinander gereiht werden und somit eine entsprechende Verknüpfung erstellt werden kann, wie dies bereits in den zuvor beschriebenen Figuren erwähnt wurde. Wird eine Verknüpfung erstellt, so wird dies beispielsweise durch ein Kreissymbol in der Verbindungsleitung 413 dargestellt, sodass der Benutzer auf einen Blick sehen kann, dass zu dieser Zuordnung eine Verknüpfung hinterlegt ist. Die Verknüpfungen können, wie in den Ausführungsbeispielen der zuvor beschriebenen Figuren bereits erwähnt, durch Funktionen, Zuordnungen, Definitionen usw. beinhalten.

Betätigt der Benutzer beispielsweise den Button "Beschreibung" 412 so wird ein Untermenü 408 geöffnet, in dem der Benutzer eine beliebigen Text zu jeder Funktion oder auch allgemein hinzufügen kann, der entsprechend im Schweißgerät 1 gespeichert wird. Hierzu wird eine Art Tastatur eingeblendet, sodass die Eingabemöglichkeiten des Schweißgerätes 1 vergrößert werden und somit auch Texteingaben möglich sind.

Selbstverständlich ist es möglich, dass die Schnittstelle bereits herstellerseitig vordefiniert wird und der Benutzer nur noch Änderungen vornehmen muss, d.h., dass bei Aufruf dieses Moduses die bereits konfigurierte Schnittstelle mit den Parametern, Verbindungen und Verknüpfungen dargestellt wird und der Benutzer nunmehr weitere Anpassungen, Änderungen und Ergänzungen vornehmen kann.

Auch ist es möglich, dass der Benutzer eine bereits vorhandene Schnittstellenkonfiguration löscht oder dass mehrere Schnittstellenkonfigurationen abgespeichert werden können, die vom Benutzer jederzeit wieder aufgerufen werden können. Die Abspeicherung erfolgt bevorzugt auf einem im Schweißgerät 1 angeordneten Speichermedium. Hierzu ist auch möglich, dass ein Butten "Speichern" vorgesehen ist. Auch können noch weitere Button vorgesehen sein, die in den dargestellten und beschriebenen Ausführungsbeispiel nicht gezeigt und erwähnt wurden.

Weiters ist für die Verfolgung und Überprüfung des Datenaustausches und der Datenzuordnung ein Debugging integriert, wodurch eine detaillierte Fehleranalyse über das Debugging möglich ist. Damit ist es möglich, einzelne Signale und/oder Variablen Aufzuzeichnen und/oder Abläufe zu simulieren, wobei die aufgezeichneten Signale in einem so genannten Graphen (also eine Darstellung wie auf einem Oszilloskop) oder textuell dargestellt wird.

Weiters ist es möglich, dass vergangene Ereignisse nachträglich zu analysieren. Hierzu wird eine Aufzeichnung aktueller Ereignisse gemacht und gespeichert, um sie später zugänglich zu machen. Dabei erfolgt die Aufzeichnung in einem Ringbuffer, sodass es ermöglicht wird, dass zu jeden Zeitpunkt der Ausführung einen bestimmten Zeitraum zum Debugging zur Verfügung zu haben, d.h., dass im Ringbuffer die einzelnen Daten zeitlich aufeinanderfolgend gespeichert werden und der Benutzer dann die Möglichkeit hat, schrittweise die einzelnen Zeitpunkte mit den dazugehörigen Daten abzurufen und anzusehen. Dies kann der Benutzer direkt am Schweißgerät durchführen oder wenn das Schweißgerät mit einem Computer verbunden ist, über den Computer angesehen werden. Ein derartiges Vorgehen wird als "Post Mortem Debugging" bezeichnet. Dabei ist es auch möglich, dass die Größe des Ringbuffers frei konfigurierbar ist.

Für das Starten und Stoppen einer Aufzeichnung können Trigger definiert werden. Die Aufzeichnungsdauer vor bzw. nach dem Trigger-Event kann beliebig auf den zur Verfügung stehenden Ringbuffer aufgeteilt werden. Der Trigger selbst wird durch einstellbare Signalzustände ausgelöst.

Weiters ist ein sogenanntes Live-Debugging möglich, bei dem die aktuellen Zustände der einzelnen Variablen, Funktionen bzw. Ein- /Ausgängen visuell dargestellt werden, ohne den Programmablauf zu verändern, d.h., dass der Benutzer direkt verfolgen kann, wie die von ihm konfigurierte Schnittstelle arbeitet. Es ist dabei möglich, an jeder beliebigen Stelle im Programmablauf einen Breakpoint zu setzen und somit den aktuellen Zustand an einer bestimmten Stelle im Programmablauf einzusehen. Des weiteren kann der Ablauf Anweisung für Anweisung schrittweise fortgesetzt werden (Step-Debugging). Um bestimmte Situationen simulieren zu können, ist es möglich einzelnen Signalen und/oder Variablen bestimmte Zustände zuzuweisen, sodass der Benutzer auch bestimmt Sonderfälle, die nur sehr selten auftreten, testen kann.

Darüber hinaus ist es möglich, dass durch den Debugger eine Simulation der Schnittstellenkonfiguration durchgeführt werden kann, wobei unter Simulation verstanden wird, dass man den Programmablauf offline virtuell nachgestellt wird. Hierzu stehen alle für das Debugging genannte Punkte ebenso im Offline-Modus zur Verfügung.

Grundsätzlich ist zu erwähnen, dass ein Verfahren zur Definition einer Schnittstelle 32, 42, 52, 62 der Schweißstromquelle 31, 41, 51, 61, insbesondere des Schweißgerätes 1, zur Kommunikation mit einer an die Schnittstelle angeschlossenen externen Maschine 26 (nicht dargestellt) beschrieben wird, wobei die Schnittstelle zur Kommunikation mit der an die Schweißstromquelle 31, 41, 51, 61 angeschlossenen Maschine 26 bevorzugt für eine parallele Datenkommunikation ausgebildet ist und zumindest einen externen Anschluss umfasst, wobei eine Verwendung einer frei konfigurierbaren Schnittstelle im Schweißgerät 1 notwendig ist, wobei die Schnittstelle softwaremäßig direkt über das Bedienpanel 70 der Schweißstromquelle 31, 41,51,61 oder einem externen an die Schweißstromquelle 31, 41, 51, 61 anschließbaren Gerät, insbesondere einem Bedienpanel, angesteuert, konfiguriert und aktiviert wird, und dass eine Zuweisen von einem Parametern des Schweißgerätes 1 zu einem internen und/oder externen Anschluss durchgeführt wird und gegebenenfalls eine Erstellen einer Verknüpfung durch aneinander reihen von softwaremäßigen Graphiksymbole erfolgt.

Der Ordnung halber sei abschließend darauf hingewiesen, dass zum besseren Verständnis des Aufbaus des Schweißroboters 26 dieser bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Schweißgerät
- 2: Stromquelle
- 3: Leistungsteil
- 4: Steuervorrichtung
- 5: Gas

- 6: Gasspeicher
- 7: Schweißbrenner
- 8: Drahtvorschubgerät
- 9: Schweißdraht
- 10: Vorratstrommel

- 11: Gehäuse
- 12: Fahrwagen
- 13: Lichtbogen
- 14: Werkstück
- 15: Kühlgerät

- 16: Wasserbehälter
- 17: Füllstandsanzeige
- 18: Ein- u/o Ausgabevorrichtung
- 19: Schweibrenner-Ein-u/o Ausgabevorrichtung
- 20: Hitzeschutzschild

- 21: Schlauchpaket
- 22: Knickschutz
- 23: Schleifschutz
- 24: Optionsträger
- 25: Haltevorrichtung

- 26: Schweißroboter
- 27: Roboterbasis
- 28: Roboterarm
- 29: Schweißkopf
- 30: Robotersteuerung

- 31, 41, 51, 61, 71, 81, 91: Schweißstromquelle
- 32, 42, 52, 62, 72, 82, 92: Schnittstelle
- 33, 43, 53, 63, 73, 83, 93: Prozessor
- 64: Modell Schweißstromquelle
- 65: Modell Schnittstelle
- 66: Modell Schweißroboter
- 101..105: interne Anschlüsse
- 201..206: externe Anschlüsse
- 301..307: Schnittstellensymbol allgemein
- 308: Schnittstellenfunktionssymbol "Zusammenführung"

- 309: Gruppensymbol
- 310: Schnittstellenfunktionssymbol "Zustandszuweisung"
- 311: Schnittstellenfunktionssymbol "Wertezuweisung"
- 312: Schnittstellenfunktionssymbol "Einheitenumrechnung"
- 313: Schnittstellenfunktionssymbol "Werteabfrage"
- 314: Schnittstellenfunktionssymbol "Invertieren"
- 315: Schnittstellenfunktionssymbolgruppe "Skalierung"
- 316: Schnittstellenfunktionssymbolgruppe "Zeitabfrage"
- 317, 318: Schnittstellenfunktionssymbolgruppe "Zeitverzögerung"
- 319: Schnittstellenfunktionssymbolgruppe "UND-Verknüpfung"

- 320, 321: farblich gestaltete Schnittstellenfunktionssymbole
- 400: Bedienpanel
- 401: Hauptmenü
- 402: Parameterbereich
- 403: Verknüpfungsbereich

- 404: Ausgangsbereich
- 405..408: Untermenü
- 409: Funktion "Parameter"
- 410: Funktion "Verbinden"
- 411: Funktion "Verknüpfen"

- 412: Funktion "Beschreiben"
- 413: Verbindungslinie

## Patentansprüche

1. Verfahren zum Konfigurieren einer Schnittstelle einer Schweißstromquelle (31, 41, 51, 61, 71, 81, 91), wobei die Schnittstelle einen zumindest einen externen Anschluss (201..206) umfasst.
**dadurch gekennzeichnet,**
- **dass** die Schnittstelle (32, 42, 52, 62, 71, 82, 92) als graphisches Schnittstellensymbol ihres zumindest einen internen Anschlusses (101.. 105) und ihres zumindest einen externen Anschlusses (201..206) repräsentiert ist,
- **dass** Schnittstellenfunktionen als graphische Schnittstellenfunktionssymbole (301..321) repräsentiert sind, wobei ein Scbnittstellenfunktionssymbol (301..321) zwischen dem zumindest einen internen Anschluss (101..105) und dem zumindest einen externen Anschluss (201..206) des Schnittstellensymbols anordenbar ist, um den zumindest einen internen Anschluss (101..105) über die zugeordnete Schnittstellenfunktion funktional mit dem zumindest einen externen Anschluss (201..206) zu verknüpfen,
- **dass** a) die äußerere Form der Schnittstellenfunktionssymbole (301..319) und des Schnittstellensymbols so gestaltet ist, dass die Schnittstellenfunktionssymbole (301..319) und das Schnittstellensymbol nach Art von Puzzle-Steinen und/oder farblich zusammenpassen, wenn die zugeordneten Schnittstellenfunktionen funktional zu dem zumindest einen internen Anschluss (101..105) und/oder dem zumindest einen externen Anschluss (201..206) passen und/oder b) die äußerere Form der Schnittstellenfunktionssymbole (301..319) so gestaltet ist, dass die Schnittstellenfunktionssymbole (301..319) nach Art von Puzzle-Steinen und/oder farblich zusammenpassen, wenn die zugeordneten Schnittstellenfunktionen funktional zueinander passen, und
- **dass** das genannte Schnittstellensymbol und die genannten Schnittstellenfunktionssymbole (301..321) zur Schnittstellenkonfiguration eingesetzt werden, wobei ein Parameter des Schweißgerätes zu einem internen und/oder externen Anschluss (101...105) zugewiesen wird und eine logische Verknüpfung der Schnittstellenfunktionen durch Aneinanderreihen der Schnittstellenfunktionssymbole (301..321) erfolgt.

2. Verfahren nach Anspruch 1, **dadurch gekennzeichnet, dass** als Parameter einer oder mehrere aus der Gruppe: Schweißstrom (I), Schweißspannung (U), Stromfrequenz (f), Pulsfrequenz, Pulsdauer, Puls-Breiten-Verhältnis, Betriebszustand, Systemzeit vorgesehen ist.

3. Verfahren nach Anspruch 1 oder 2, **dadurch gekennzeichnet, dass** das Modell der Schweißstromquelle (31, 41, 51, 61, 71, 81, 91) als Satz von Programmierbefehlen repräsentiert ist und ein Programmierbefehl dem zumindest einen Betriebsparameter (U, I, f) den zumindest einen Wert zuweist.

4. Verfahren nach Anspruch 1 oder 2, **dadurch gekennzeichnet, dass** das Modell der Schweißstromquelle (31, 41, 51, 61, 71, 81, 91) als Tabelle repräsentiert ist und eine Zelle der Tabelle den zumindest einen Wert des zumindest einen Betriebsparameters (U, I, f) enthält.

5. Verfahren nach Anspruch 1 oder 2, **dadurch gekennzeichnet, dass** das Modell der Schweißstromquelle (31,41, 51, 61, 71, 81, 91) als graphisches Symbol und der zumindest eine Betriebsparameter (U, I, f) als Eingabesymbol repräsentiert sind und eine Eingabe des zumindest einen Wertes bei dem Eingabesymbol dem zumindest einen Betriebsparameter (U, I, f) den genannten Wert zuweist.

6. Verfahren nach einem der Ansprüche 1 bis 5, **dadurch gekennzeichnet, dass** die Schnittstelle (32, 42, 52, 62, 71, 82, 92) eine Schnittstelledefinition umfasst, welche eine oder mehrere Schnittstellenfunktionen aus der Gruppe: Zuweisung eines internen Anschlusses (101..105) zu einem externen Anschluss (201..206) der Schnittstelle, Skalierungen von über die Schnittstelle (32, 42, 52, 62, 71, 82, 92) übermittelten Werten, Umrechnung einer Einheit eines derart übermittelten Wertes, Umwandlung eines Datenformats eines derart übermittelten Wertes, Invertieren eines derart übermittelten Wertes sowie Zeitverzögerung eines derart übermittelten Wertes umfasst.

7. Verfahren nach einem der Ansprüche 1 bis 6, **dadurch gekennzeichnet, dass** die Schnittstelle (32, 42, 52, 62, 71, 82, 92) als Satz von Programmierbefehlen repräsentiert ist und ein Programmierbefehl den zumindest einen internen Anschluss (101..105) über eine Schnittstellenfunktion funktional mit dem zumindest einen externen Anschluss (201..206) verknüpft.

8. Verfahren nach einem der Ansprüche 1 bis 6, **dadurch gekennzeichnet, dass** die Schnittstelle (32,42,52,62,71, 82, 92) als Tabelle repräsentiert ist, wobei eine Zelle der Tabelle dem zumindest einen internen Anschluss (101..105) und/oder dem zumindest einen externen Anschluss (201..206) der Schnittstelle (32,42, 52,62, 71,82,92) zugeordnet ist und eine Schnittstellenfunktion enthält, welche den zumindest einen internen Anschluss (101..105) funktional mit dem zumindest einen externen Anschluss (201..206) verknüpft..

9. Schweißstromquelle (31, 41, 51, 61, 71, 81, 91) mit einer Schnittstelle (32,42, 52, 62), umfassend:
- ein Eingabegerät zur Eingabe zumindest eines Wertes für zumindest einen Betriebsparameters (U,I, f) der Schweißstromquelle (31, 41, 51, 61, 71, 81,91), wobei die Schnittstelle zumindest einen externen Anschluss (201..206) aufweist.
**dadurch gekennzeichnet,**
- **dass** die Schnittstelle (32, 42, 52, 62, 71, 82, 92) als graphisches Schnittstellensymbol ihres zumindest einen internen Anschlusses (101..105) und ihres zumindest einen externen Anschlusses (201..206) repräsentiert ist,
- **dass** Schnittstellenfunktionen als graphische Schnittstellenfunktionssymbole (301..321) repräsentiert sind, wobei ein Schnittstellenfunktionssymbol (301..321) zwischen dem zumindest einen internen Anschluss (101..105) und dem zumindest einen externen Anschluss (201..206) des Schnittstellensymbols anordenbar ist, um den zumindest einen internen Anschluss (101..105) über die zugeordnete Schnittsteflenfunktion funktional mit dem zumindest einen externen Anschluss (201..206) zu verknüpfen,
- **dass** a) die äußerere Form der Schnittstellenfunktionssymbole (301..319) und des Schnittstellensymbols so gestaltet ist, dass die Schnittstellenfunktionssymbole (301..319) und das Schnittstellensymbol nach Art von Puzzle-Steinen und/oder farblich zusammenpassen, wenn die zugeordneten Schnittstellenfunktionen funktional zu dem zumindest einen internen Anschluss (101..105) und/oder dem zumindest einen externen Anschluss (201..206) passen und/oder b) die äußerere Form der Schnittstellenfunktionssymbole (301..319) so gestaltet ist, dass die Schnittstellenfunktionssymbole (301..319) nach Art von Puzzle-Steinen und/oder farblich zusammenpassen, wenn die zugeordneten Schnittstellenfunktionen funktional zueinander passen, und
- **dass** das genannte Schnittstellensymbol und die genannten Schnittstellenfunktionssymbole (301..321) zur Schnittstellenkonfiguration vorgesehen sind, wobei das Eingabegerät zum Zuweisen eines Parameters des Schweißgerätes zu einem internen und/oder externen Anschluss (101...105) und zum Erstellen einer logischen Verknüpfung der Schnittstellenfunktionen durch Aneinanderreihen der Schnittstellenfunktionssymbole (301..321) eingerichtet ist.

10. Computerprogrammprodukt mit einem darauf gespeicherten Computerprogramm, das in den einen Speicher eines Personal Computers oder einer Schweißstromquelle (31, 41, 51, 61, 71, 81, 91) nach Anspruch 9 ladbar ist und das Verfahren nach einem der Ansprüche 1 bis 8 ausführt, wenn das Computerprogramm dort ausgeflihrt wird.

## Claims

1. Method for configuring an interface of a welding power source (31, 41, 51, 61, 71, 81, 91), the interface comprising at least one external terminal (201... 206), **characterised in that**
- the interface (32, 42, 52, 62, 71, 82, 92) is represented as a graphical interface symbol of the at least one internal terminal (101... 105) thereof and the at least one external terminal (201... 206) thereof,
- interface functions are represented as graphical interface function symbols (301... 321), an interface function symbol (301... 321) being arrangeable between the at least one internal terminal (101... 105) and the at least one external terminal (201... 206) of the interface symbol so as functionally to link the at least one internal terminal (101... 105) to the at least one external terminal (201... 206) via the associated interface function,
- a) the external shape of the interface function symbols (301... 319) and of the interface symbol is configured in such a way that the interface function symbols (301... 319) and the interface symbol fit together in the manner of puzzle pieces and/or in terms of colour if the associated interface functions match the at least one internal terminal (101... 105) and/or the at least one external terminal (201... 206) in terms of function, and/or b) the outer shape of the interface function symbols (301... 319) is configured in such a way that the interface function symbols (301... 319) fit together in the manner of puzzle pieces and/or in terms of colour if the associated interface functions match in terms of function, and
- said interface symbol and said interface function symbols (301... 321) are used for interface configuration, wherein a parameter of the welding device is assigned to an internal and/or external terminal (101... 105) and wherein logical linking of the interface functions is provided by stringing together the interface function symbols (301... 321).

2. Method according to claim 1, **characterised in that** one or more parameters from the group of weld current (I), weld voltage (U), current frequency (f), pulse frequency, pulse duration, pulse width ratio, operating state and system time are provided as parameters.

3. Method according to either claim 1 or claim 2, **characterised in that** the model of the welding power source (31, 41, 51, 61, 71, 81, 91) is represented as a set of program commands and a program command assigns the at least one value to the at least one operating parameter (U, I, f).

4. Method according to either claim 1 or claim 2, **characterised in that** the model of the welding power source (31, 41, 51, 61, 71, 81, 91) is represented as a table and a cell of the table contains the at least one value of the at least one operating parameter (U, I, f).

5. Method according to either claim 1 or claim 2, **characterised in that** the model of the welding power source (31, 41, 51, 61, 71, 81, 91) is represented as a graphical symbol and the at least one operating parameter (U, I, f) is represented as an input symbol, and an input of the at least one value at the input symbol assigns said value to the at least one operating parameter (U, I, f).

6. Method according to any of claims 1 to 5, **characterised in that** the interface (32, 42, 52, 62, 71, 82, 92) comprises an interface definition which comprises one or more interface functions from the group of: assigning an internal terminal (101... 105) to an external terminal (201... 206) of the interface, scaling the values conveyed via the interface (32, 42, 52, 62, 71, 82, 92), converting a unit of a value conveyed in this manner, changing a data format of a value conveyed in this manner, inverting a value conveyed in this manner, and time-delaying a value conveyed in this manner.

7. Method according to any of claims 1 to 6, **characterised in that** the interface (32, 42, 52, 62, 71, 82, 92) is represented as a set of programming commands and a programming command functionally links the at least one internal terminal (101... 105) to the at least one external terminal (201... 206) via an interface function.

8. Method according to any of claims 1 to 6, **characterised in that** the interface (32, 42, 52, 62, 71, 82, 92) is represented as a table, a cell of the table being
associated with the at least one internal terminal (101... 105) and/or the at least one external terminal (201...206) of the interface (32, 42, 52, 62, 71, 82, 92) and containing an interface function which functionally links the at least one internal terminal (101... 105) to the at least one external terminal (201... 206).

9. Welding power source (31, 41, 51, 61, 71, 81, 91) having an interface (32, 42, 52, 62), comprising:
- an input device for inputting at least one value for at least one operating parameter (U, I, f) of the welding power source (31, 41, 51, 61, 71, 81, 91), the interface comprising at least one external terminal (201... 206),
**characterised in that**
- the interface (32, 42, 52, 62, 71, 82, 93) is represented as a graphical interface symbol of the at least one internal terminal (101... 105) thereof and the at least one external terminal (201... 206) thereof,
- interface functions are represented as graphical interface function symbols (301... 321), an interface function symbol (301... 321) being arrangeable between the at least one internal terminal (101... 105) and the at least one external terminal (201... 206) of the interface symbol so as functionally to link the at least one internal terminal (101... 105) to the at least one external terminal (201... 206) via the associated interface function,
- a) the external shape of the interface function symbols (301... 319) and of the interface symbol is configured in such a way that the interface function symbols (301... 319) and the interface symbol fit together in the manner of puzzle pieces and/or in terms of colour if the associated interface functions match the at least one internal terminal (101... 105) and/or the at least one external terminal (201... 206) in terms of function, and/or b) the outer shape of the interface function symbols (301... 319) is configured in such a way that the interface function symbols (301... 319) fit together in the manner of puzzle pieces and/or in terms of colour if the associated interface functions match in terms of function, and
- said interface symbol and said interface function symbols (301... 321) are used for interface configuration, wherein the inputting device is adapted to assign a parameter of the welding device to an internal and/or external terminal (101... 105) and to provide logical linking of the interface functions by stringing together the interface function symbols (301... 321).

10. Computer program product comprising a computer program stored thereon, which can be loaded into a memory of a personal computer or of a welding power source (31, 41, 51, 61, 71, 81, 91) according to claim 9 and carries out the method according to any of claims 1 to 8 when the computer program is executed therein.

## Revendications

1. Procédé pour configurer une interface d'une source de courant de soudage (31, 41, 51, 61, 71, 81, 91), ladite interface comprenant au moins un raccord externe (201..206),
**caractérisé**
- **en ce que** l'interface (32, 42, 52, 62, 71, 82, 92) est représentée sous forme de symbole d'interface graphique de son au moins un raccord interne (101..105) et de son au moins un raccord externe (201..206),
- **en ce que** des fonctions d'interface sont représentées sous forme de symboles de fonctions d'interface (301..321), un symbole de fonction d'interface (301..321) pouvant être disposé entre l'au moins un raccord interne (101..105) et l'au moins un raccord externe (201..206) du symbole d'interface pour relier de manière fonctionnelle l'au moins un raccord interne (101..105) par l'intermédiaire de la fonction d'interface associée à l'au moins un raccord externe (201..206),
- **en ce que** a) la forme extérieure des symboles de fonctions d'interface (301..319) et du symbole d'interface est conçue de telle sorte que les symboles de fonctions d'interface (301..319) et le symbole d'interface s'adaptent à la manière de pièces de puzzle et/ou par concordance de couleurs lorsque les fonctions d'interface associées s'adaptent de manière fonctionnelle à l'au moins un raccord interne (101..105) et/ou à l'au moins un raccord externe (201..206) et/ou b) la forme extérieure des symboles de fonctions d'interface (301..319) est conçue de telle sorte que les symboles de fonctions d'interface (301..319) s'adaptent à la manière de pièces de puzzle et/ou par concordance de couleurs lorsque les fonctions d'interface associées s'adaptent de manière fonctionnelle entre elles, et
- **en ce que** ledit symbole d'interface et lesdits symboles de fonction d'interface (301..321) sont employés pour la configuration de l'interface, un paramètre de l'appareil de soudage étant attribué à un raccord interne et/ou externe (101..105) et une liaison logique des fonctions d'interface s'effectuant par juxtaposition des symboles de fonctions d'interface (301..321).

2. Procédé selon la revendication 1, **caractérisé en ce qu'**un ou plusieurs des paramètres parmi le groupe : courant de soudage (I), tension de soudage (U), fréquence de courant (f), fréquence d'impulsions, durée d'impulsion, rapport impulsion/largeur, état de service, heure système, est prévu.

3. Procédé selon la revendication 1 ou 2, **caractérisé en ce que** le modèle de la source de courant de soudage (31, 41, 51, 61, 71, 81, 91) est représenté sous forme d'un jeu d'instructions de programme et une instruction de programme attribue l'au moins une valeur à l'au moins un paramètre d'exploitation (U, I, f).

4. Procédé selon la revendication 1 ou 2, **caractérisé en ce que** le modèle de la source de courant de soudage (31, 41, 51, 61, 71, 81, 91) est représenté sous forme de tableau et une cellule du tableau comprend l'au moins une valeur de l'au moins un paramètre d'exploitation (U, I, f).

5. Procédé selon la revendication 1 ou 2, **caractérisé en ce que** le modèle de la source de courant de soudage (31, 41, 51, 61, 71, 81, 91) est représenté sous forme de symbole graphique et l'au mmoins un paramètre d'exploitation (U, I, f) est représenté sous forme de symbole d'entrée et une entrée de l'au moins une valeur dans le symbole d'entrée attribue ladite valeur à l'au moins un paramètre d'exploitation (U, I, f).

6. Procédé selon l'une des revendications 1 à 5, **caractérisé en ce que** l'interface (32, 42, 52, 62, 71, 82, 92) comprend une définition d'interface qui comprend une ou plusieurs fonctions d'interface parmi le groupe suivant : attribution d'un raccord interne (101..105) à un raccord externe (201..206) de l'interface, graduations de valeurs transmises par l'intermédiaire de l'interface (32, 42, 52, 62, 71, 82, 92), conversion d'une unité d'une valeur transmise de cette manière, transformation d'un format de données d'une valeur transmise de cette manière, inversion d'une valeur transmise de cette manière ainsi que temporisation d'une valeur transmise de cette manière.

7. Procédé selon l'une des revendications 1 à 6, **caractérisé en ce que** l'interface (32, 42, 52, 62, 71, 82, 92) est représentée sous forme de jeu d'instructions de programme et une instruction de programme relie de manière fonctionnelle l'au moins un raccord interne (101..105) par l'intermédiaire d'une fonction d'interface à l'au moins un raccord externe (201..206).

8. Procédé selon l'une des revendications 1 à 6, **caractérisé en ce que** l'interface (32, 42, 52, 62, 71, 82, 92) est représentée sous forme de tableau, une cellule du tableau étant associée à l'au moins un raccord interne (101..105) et/ou à l'au moins un raccord externe (201..206) de l'interface (32, 42, 52, 62,.71, 82, 92) et comprenant une fonction d'interface qui relie de manière fonctionnelle l'au moins un raccord interne (101..105) à l'au moins un raccord externe (201..206).

9. Source de courant de soudage (31, 41, 51, 61, 71, 81, 91) comportant une interface (32, 42, 52, 62), comprenant .
- un dispositif d'entrée pour entrer au moins une valeur pour au moins un paramètre d'exploitation (U, I, f) de la source de courant de soudage (31, 41, 51, 61, 71, 81, 91), ladite interface présentant au moins un raccord externe (201..206),
**caractérisée**
- **en ce que** l'interface (32, 42, 52, 62, 71, 82, 92) est représentée sous forme de symbole d'interface graphique de son au moins un raccord interne (101..105) et de son au moins un raccord externe (201..206),
- **en ce que** des fonctions d'interface sont représentées sous forme de symboles de fonctions d'interface (301..321), un symbole de fonction d'interface (301..321) pouvant être disposé entre l'au moins un raccord interne (101..105) et l'au moins un raccord externe (201..206) du symbole d'interface pour relier de manière fonctionnelle l'au moins un raccord interne (101..105) par l'intermédiaire de la fonction d'interface associée à l'au moins un raccord externe (201..206),
- **en ce que** a) la forme extérieure des symboles de fonctions d'interface (301..319) et du symbole d'interface est conçue de telle sorte que les symboles de fonctions d'interface (301..319) et le symbole d'interface s'adaptent à la manière de pièces de puzzle et/ou par concordance de couleurs lorsque les fonctions d'interface associées s'adaptent de manière fonctionnelle à l'au moins un raccord interne (101..105) et/ou à l'au moins un raccord externe (201..206) et/ou b) la forme extérieure des symboles de fonctions d'interface (301..319) est conçue de telle sorte que les symboles de fonctions d'interface (301..319) s'adaptent à la manière de pièces de puzzle et/ou par concordance de couleurs lorsque les fonctions d'interface associées s'adaptent de manière fonctionnelle entre elles, et
- **en ce que** ledit symbole d'interface et lesdits symboles de fonctions d'interface (301..321) sont prévus pour la configuration de l'interface, le dispositif d'entrée étant conçu pour attribuer un paramètre de l'appareil de soudage à un raccord interne et/ou externe (101...105) et pour établir une liaison logique des fonctions d'interface par juxtaposition des symboles de fonctions d'interface (301..321).

10. Produit programme informatique sur lequel est stocké un programme informatique qui peut être chargé dans la mémoire d'un ordinateur individuel ou d'une source de courant de soudage (31, 41, 51, 61, 71, 81, 91) selon la revendication 9 et met en oeuvre le procédé selon l'une des revendications 1 à 8 lorsque le programme informatique y est exécuté.
